(19) Europäisches Patentamt
European Patent Office
Office européen des brevets

(11) **EP 4 786 658 A1**

(12) **EUROPEAN PATENT APPLICATION**
published in accordance with Art. 153(4) EPC

(43) Date of publication:
**05.08.2026 Bulletin 2026/32**

(21) Application number: **24872461.9**

(22) Date of filing: **26.09.2024**

(51) International Patent Classification (IPC):
**D01F 1/10** (2006.01) **C01G 41/00** (2006.01)
**D06M 11/48** (2006.01)

(52) Cooperative Patent Classification (CPC):
**C01G 41/00; D01F 1/10; D06M 11/48**

(86) International application number:
**PCT/JP2024/034547**

(87) International publication number:
**WO 2025/070677 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.09.2023 JP 2023170834**

(71) Applicant: SUMITOMO METAL MINING CO., LTD.
**Tokyo
105-8716 (JP)**

(72) Inventors:
• **NAKAKURA, Shuhei
Ichikawa-shi, Chiba 272-8588 (JP)**
• **MACHIDA, Keisuke
Ichikawa-shi, Chiba 272-8588 (JP)**

(74) Representative: **Hirons, Daniel Stuart
Withers & Rogers LLP
2 London Bridge
London SE1 9RA (GB)**

(54) **INFRARED-ABSORBING FIBER AND FIBER PRODUCT**

(57)    An object to be solved by the invention is to provide an infrared-absorbing fiber containing complex tungsten oxide particles having excellent infrared absorbing performance. The infrared-absorbing fiber of the present invention includes: a fiber; and complex tungsten oxide particles located at one or more locations selected from an interior of the fiber and a surface of the fiber. The complex tungsten oxide particles contain a complex tungsten oxide. The complex tungsten oxide is represented by a general formula $M_xW_yO_z$ ($0.20 \leq x/y \leq 0.37$, and $2.2 \leq z/y \leq 3.3$). The complex tungsten oxide has a hexagonal crystal system. In a STEM-HAADF image of the complex tungsten oxide particles with a beam incident along with [001], the complex tungsten oxide particles contain 0.01% or greater and 10% or less by number of spots, in which Z-contrast of tungsten atom decreases to equal to or less than 95% of an average value.

EP 4 786 658 A1

**Description**

TECHNICAL FIELD

The present invention relates to an infrared-absorbing fiber and a fiber product.

BACKGROUND ART

Functional cold-protection garments having a heat-retaining function and a heat-generating function have been proposed. There are roughly three methods for enhancing the cold protection effect.

The first method is a method of maintaining heat retention by reducing dissipation of heat generated from a human body.

One specific example of the first method is a method of maintaining heat retention by reducing dissipation of heat generated from a human body to the outside by physically increasing air layers by, for example, controlling the woven structure of the cold-protection garment or making the fiber used hollow or porous.

The second method is a method of making the fiber contained in the cold-protection garment store heat by taking advantage of chemical and physical properties of the fiber.

The third method is a method of storing heat proactively by applying chemical or physical treatment to the fiber contained in the cold-protection garment, to radiate heat generated from a human body toward the human body again, to convert part of sunlight received by the cold-protection garment into heat, or the like.

As one example of the second method, PTL 1 discloses a technique of utilizing latent heat of phase transition of a paraffin-based hydrocarbon for heat storage.

As examples of the third method, a proposed method includes kneading alumina-based, zirconia-based, magnesia-based, and any other ceramic particles into the fiber itself and utilizes the far-infrared radiation effect and the photothermal conversion effect of these inorganic fine particles, or another proposed method uses a dye having high absorption in the near-infrared region. That is, methods that proactively take in external energy have been proposed.

For example, PTL 2 discloses a heat-radiating fiber characterized by containing one, or two or more types of inorganic fine particles having heat-radiating characteristics and each containing at least one of metal or metal ions having a thermal conductivity of 0.3 kcal/m$^2$·sec·°C or higher.

PTL 3 discloses a near-infrared absorption engineering method for cellulosic fiber structures, wherein the method dyes the fiber with a combination of a dye having near-infrared-absorption higher than that of a black dye, with another dye, resulting in a fabric having, as a degree of near-infrared absorption, a spectral reflectance of 65% or lower within a range of 750 to 1,500 nm. Direct dyes, reactive dyes, naphthol dyes, and vat dyes are disclosed as dyes having absorption in the near-infrared region higher than that of a black dye.

In PTL 4, the applicant discloses a technique directed to a near-infrared-absorbing fiber, and a fiber product using the fiber, wherein the near-infrared-absorbing fiber contains ultrafine particles having near-infrared absorption characteristics inside the fiber, wherein the ultrafine particles having the near-infrared absorption characteristics are complex tungsten oxide ultrafine particles, and wherein the XRD peak top intensity of the complex tungsten oxide ultrafine particles is at a ratio of 0.13 or higher when the XRD peak intensity of the (220) plane of a silicon powder standard sample (available from NIST, 640c) is regarded to be 1.

When an image of a human body is captured with a CCD camera or the like using natural light as a light source, the image of the human body is captured in the state of being seen through the outfit, through which infrared rays contained in the natural light are transmitted. Therefore, in recent years, criminal acts utilizing the above phenomenon, i.e., so-called secret filming, have become a social problem. In order to solve this problem, infrared-shielding fibers that absorb or reflect infrared rays have been produced, and clothing (infrared-shielding fiber structures) obtained by processing the infrared-shielding fibers has been developed.

For example, PTL 5 discloses a knitted fabric obtained by attaching an infrared absorber selected from anthraquinone-based, indigo-based, benzoquinone-based, naphthoquinone-based, and phthalocyanine-based infrared absorbers to a core-sheath type synthetic fiber.

CITATION LIST

PATENT LITERATURE

PTL 1: Japanese Patent Application Laid-Open Publication No. 2018-135605

PTL 2: Japanese Patent Application Laid-Open Publication No. H11-279830

PTL 3: Japanese Patent Application Laid-Open Publication No. H9-291463

PTL 4: International Publication No. WO 2018/235839

PTL 5: Japanese Patent Application Laid-Open Publication No. 2008-223171

SUMMARY OF THE INVENTION

TECHNICAL PROBLEM

Infrared-absorbing fibers are required to prevent transmission or reflection of infrared rays from the viewpoint of preventing the so-called secret filming, while they are also required to be restricted in the content of the infrared-absorbing particles in order to not spoil the texture of the fibers. Therefore, there is a need for infrared-absorbing fibers containing infrared-absorbing particles having excellent infrared-absorbing performance.

According to one aspect of the present invention, it is an object to provide an infrared-absorbing fiber containing complex tungsten oxide particles having excellent infrared absorbing performance.

SOLUTION TO THE PROBLEM

According to an aspect of the present invention, an infrared-absorbing fiber is provided, including:

a fiber; and
complex tungsten oxide particles located at one or more locations selected from an interior of the fiber and a surface of the fiber,
wherein the complex tungsten oxide particles contain a complex tungsten oxide,
the complex tungsten oxide is represented by a general formula $M_xW_yO_z$ (where the element M is one or more elements selected from alkali metal elements, alkaline earth metal elements, rare earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I, W is tungsten, O is oxygen, $0.20 \leq x/y \leq 0.37$, and $2.2 \leq z/y \leq 3.3$),
the complex tungsten oxide has a hexagonal crystal system, and
in a STEM-HAADF image of the complex tungsten oxide particles with a beam incident along [001], the complex tungsten oxide particles contain 0.01% or greater and 10% or less by number of spots, in which Z-contrast of tungsten atom decreases to equal to or lower than 95% of an average value.

ADVANTAGEOUS EFFECTS OF THE INVENTION

According to an aspect of the present invention, it is possible to provide an infrared-absorbing fiber containing complex tungsten oxide particles having excellent infrared absorbing performance.

BRIEF DESCRIPTION OF THE DRAWINGS

[FIG. 1] FIG. 1 is a schematic image of a composite material production apparatus that can be suitably used in a method for producing complex tungsten oxide particles according to an embodiment.
[FIG. 2] FIG. 2 is an explanatory image of a reduction treatment apparatus used in a reduction treatment step.
[FIG. 3] FIG. 3 is a schematic image of an infrared-absorbing particle dispersion liquid.
[FIG. 4] FIG. 4 is a schematic image of an infrared-absorbing fiber.
[FIG. 5] FIG. 5 is a schematic view of a crystal structure of complex tungsten bronze observed along the [001] viewing direction.
[FIG. 6] FIG. 6 is an XRD pattern of complex tungsten oxide particles obtained in Example 1.
[FIG. 7A] FIG. 7A is a STEM-HAADF image of the complex tungsten oxide particles obtained in Example 1.
[FIG. 7B] FIG. 7B is a STEM-HAADF image of the complex tungsten oxide particles obtained in Example 1.
[FIG. 8A] FIG. 8A is a line profile of quantified Z-contrast of tungsten atoms on a line L1 in FIG. 7B.
[FIG. 8B] FIG. 8B is a line profile of quantified Z-contrast of tungsten atoms on a line L2 in FIG. 7B.
[FIG. 8C] FIG. 8C is a line profile of quantified Z-contrast of tungsten atoms on a line L3 in FIG. 7B.

[FIG. 8D] FIG. 8D is a line profile of quantified Z-contrast of tungsten atoms on a line L4 in FIG. 7B.

[FIG. 8E] FIG. 8E is a line profile of quantified Z-contrast of tungsten atoms on a line L5 in FIG. 7B.

[FIG. 8F] FIG. 8F is a line profile of quantified Z-contrast of tungsten atoms on a line L6 in FIG. 7B.

[FIG. 9A] FIG. 9A is a STEM-HAADF image of complex tungsten oxide particles obtained in Comparative Example 1.

[FIG. 9B] FIG. 9B is a STEM-HAADF image of the complex tungsten oxide particles obtained in Comparative Example 1.

[FIG. 10A] FIG. 10A is a STEM-HAADF image of the complex tungsten oxide particles obtained in Comparative Example 1.

[FIG. 10B] FIG. 10B is a line profile of quantified Z-contrast of tungsten atoms of the complex tungsten oxide particles obtained in Comparative Example 1.

[FIG. 10C] FIG. 10C is a line profile of quantified Z-contrast of tungsten atoms of the complex tungsten oxide particles obtained in Comparative Example 1.

[FIG. 10D] FIG. 10D is a line profile of quantified Z-contrast of tungsten atoms of the complex tungsten oxide particles obtained in Comparative Example 1.

[FIG. 11A] FIG. 11A is a transmitted light profile of a near-infrared-absorbing particle dispersion liquid according to Example 1.

[FIG. 11B] FIG. 11B is a transmitted light profile of a near-infrared-absorbing particle dispersion liquid according to Comparative Example 1.

[FIG. 12A] FIG. 12A is a STEM-HAADF image of the complex tungsten oxide particles according to Example 1 along the [110] viewing direction.

[FIG. 12B] FIG. 12B is a STEM-HAADF image of the complex tungsten oxide particles according to Example 1 along the [110] viewing direction.

[FIG. 13] FIG. 13 is a diagram schematically illustrating the W and Cs atom location in FIG. 12B.

[FIG. 14A] FIG. 14A shows XPS spectra of W atoms of the complex tungsten oxide particles obtained in Example 1.

[FIG. 14B] FIG. 14B shows XPS spectra of W atoms of the complex tungsten oxide particles obtained in Comparative Example 1.

[FIG. 15A] FIG. 15A shows molar absorptivity curves of complex tungsten oxide particles obtained in Comparative Example 1.

[FIG. 15B] FIG. 15B shows molar absorptivity curves of the complex tungsten oxide particles obtained in Comparative Example 1.

[FIG. 16A] FIG. 16A shows the reflectance of a knit fabric for secret filming prevention evaluation obtained in Example 1.

[FIG. 16B] FIG. 16B shows the reflectance of a knit fabric for secret filming prevention evaluation obtained in Comparative Example 1.

## DETAILED DESCRIPTION OF THE INVENTION

Specific examples of an infrared-absorbing fiber and a fiber product according to one embodiment of the present disclosure (hereinafter referred to as "the present embodiment") will be described below with reference to the drawings. The present invention is not limited to these examples but is represented by the claims, and it is intended that all modifications that fall within the spirit and scope of equivalence to the claims are encompassed.

Before describing the infrared-absorbing fiber, complex tungsten oxide particles contained in the infrared-absorbing fiber of the present embodiment will be described.

[Complex Tungsten Oxide Particles]

The complex tungsten oxide particles contain a complex tungsten oxide. Although the complex tungsten oxide particles may be composed of a complex tungsten oxide, this does not preclude that the complex tungsten oxide particles contain unavoidable impurities.

The complex tungsten oxide is represented by a general formula $M_xW_yO_z$.

The element M in the above general formula can be one or more elements selected from alkali metal elements, alkaline earth metal elements, rare earth elements, Mg (magnesium), Zr (zirconium), Cr (chromium), Mn (manganese), Fe (iron), Ru (ruthenium), Co (cobalt), Rh (rhodium), Ir (iridium), Ni (nickel), Pd (palladium), Pt (platinum), Cu (copper), Ag (silver), Au (gold), Zn (zinc), Cd (cadmium), Al (aluminum), Ga (gallium), In (indium), Tl (thallium), Si (silicon), Ge (germanium), Sn (tin), Pb (lead), Sb (antimony), B (boron), F (fluorine), P (phosphorus), S (sulfur), Se (selenium), Br (bromine), Te (tellurium), Ti (titanium), Nb (niobium), V (vanadium), Mo (molybdenum), Ta (tantalum), Re (rhenium), Be (beryllium), Hf (hafnium), Os (osmium), Bi (bismuth), and I (iodine). Further, W represents tungsten, O represents oxygen, and it is preferable that x, y, and z satisfy $0.20 \leq x/y \leq 0.37$ and $2.2 \leq z/y \leq 3.3$.

Examples of alkali metal elements include Li (lithium), Na (sodium), K (potassium), Rb (rubidium), Cs (cesium), and Fr (francium). Examples of alkaline earth metal elements include Ca (calcium), Sr (strontium), Ba (barium), and Ra (radium). Examples of rare earth elements include Sc (scandium), Y (yttrium), La (lanthanum), Ce (cerium), Pr (praseodymium), Nd (neodymium), Pm (promethium), Sm (samarium), Eu (europium), Gd (gadolinium), Tb (terbium), Dy (dysprosium), Ho (holmium), Er (erbium), Tm (thulium), Yb (ytterbium), and Lu (lutetium).

The crystal system of the complex tungsten oxide is hexagonal.

In a STEM-HAADF image of the complex tungsten oxide particles with the beam incident along [001], the complex tungsten oxide particles contain 0.01% or greater and 10% or less by number of spots in which the Z-contrast of tungsten atoms is reduced to equal to or less than 95% the average value.

(1) Composition

The complex tungsten oxide contained in the complex tungsten oxide particles is represented by the general formula $M_xW_yO_z$ as described above. Since the element M, W, and O, and x, y, and z in the formula have already been described, descriptions thereof are omitted here.

The complex tungsten oxide can assume one or more types of tungsten bronze-type crystal structures selected from, for example, tetragonal crystal, cubic crystal, and hexagonal crystal. The complex tungsten oxide contained in the complex tungsten oxide particles of the present embodiment is hexagonal.

When the complex tungsten oxide has a hexagonal crystal structure, the particles have an improved transmission in the visible region, and an improved absorption of light in the near-infrared region.

When the complex tungsten oxide has a tetragonal or cubic tungsten bronze-type crystal structure, it also functions as an infrared-shielding material. However, there is a tendency that different crystal structures of the complex tungsten oxide have absorption at different positions in the near-infrared region, and there is a tendency that a tetragonal crystal has an absorption position in the near-infrared region at a longer wavelength than that at which a cubic crystal has, and a hexagonal crystal has an absorption position at an even longer wavelength than that at which a tetragonal crystal has. Along with these differences in the absorption position, light in the visible region is the least absorbed by a hexagonal crystal, the next least absorbed by a tetragonal crystal, and the most absorbed by a cubic crystal. Therefore, it is preferable to use a complex tungsten oxide having a hexagonal tungsten bronze-type crystal structure for applications for transmitting more light in the visible region and shielding more light in the infrared region.

As described above, when the complex tungsten oxide has a hexagonal crystal structure, the complex tungsten oxide particles have a particularly improved transmittance of light in the visible region and a particularly improved absorption of light in the near-infrared region. Therefore, it is preferable that the complex tungsten oxide particles contain a complex tungsten oxide having a hexagonal crystal structure. Use of one or more selected from Cs, Rb, K, Tl, Ba, and In as the element M facilitates formation of a hexagonal crystal. Therefore, it is preferable that the element M includes one or more selected from Cs, Rb, K, Tl, Ba, and In, and it is more preferable that the element M includes one or more elements selected from Rb and Cs.

Here, the location of the element M in the case where the complex tungsten oxide has a hexagonal crystal structure will be described.

When six octahedrons, each of which is composed of a W (tungsten) atom and six O (oxygen) atoms as a unit, i.e., each of which has O atoms on the vertices and a W atom in the center, are assembled, a hexagonal void (tunnel) composed of O atoms is formed. Then, when the element M is located in the void, one unit is formed. When a multitude of this one unit are assembled, a hexagonal crystal structure is formed.

When the complex tungsten oxide having a hexagonal crystal structure has a uniform crystal structure, the ratio by number of moles of the element M to W is $0.20 \leq x/y \leq 0.37$, preferably $0.25 \leq x/y \leq 0.37$, and more preferably $0.30 \leq x/y \leq 0.36$. Theoretically, it is considered that, when z/y=3, the value of x/y satisfying 0.33 results in the element M being located in all hexagonal voids. The above x, y, and z refer to x, y, and z in the above-described general formula $M_xW_yO_z$, and the same applies hereinafter.

The complex tungsten oxide has a composition obtained by adding the element M to tungsten trioxide ($WO_3$). Since tungsten trioxide does not contain effective free electrons, it cannot exhibit an infrared absorption effect unless the ratio of oxygen to 1 mole of tungsten is less than 3. However, with the addition of the element M, the complex tungsten oxide can produce free electrons and achieve an infrared absorption effect. Therefore, in the complex tungsten oxide, the ratio of oxygen to 1 mole of tungsten may be 3 or less, and the ratio of oxygen to 1 mole of tungsten may even exceed 3. However, the $WO_2$ crystal phase might absorb or scatter light in the visible region, and might cause a decrease in the absorption of light in the near-infrared region. Therefore, from the viewpoint of inhibiting the formation of $WO_2$, the ratio of oxygen to 1 mole of tungsten is preferably greater than 2.

Therefore, it is preferable that z/y, which is the ratio of oxygen to 1 mole of tungsten, satisfies $2.2 \leq z/y \leq 3.3$ as described above.

(2) Average Particle Diameter

When using the complex tungsten oxide particles of the present embodiment for, for example, an application in which they are required to maintain transparency, the average particle diameter of the complex tungsten oxide particles is preferably 800 nm or less. This is because particles having an average particle diameter of 800 nm or less do not completely shield light by scattering, but can maintain a high visibility and can efficiently maintain transparency at the same time in the visible region. In particular, when transparency in the visible region is an important issue, it is preferable to give greater consideration into scattering of light in the visible region by the particles.

When it is an important issue to reduce scattering of light in the visible region by the particles, the average particle diameter of the particles is more preferably 200 nm or less, and even more preferably 100 nm or less.

This is because particles having a small average particle diameter can reduce scattering of light, and can reduce generation of an unintended gloss in the visible region and an unintended hue due to light scattering having a wavelength-dependent intensity (Rayleigh scattering).

In addition, if coarse particles are present in a step of kneading the complex tungsten oxide particles of the present embodiment into fibers, yarns might break during spinning. From this viewpoint as well, it is preferable to reduce the particle diameter of the complex tungsten oxide particles.

Therefore, the average particle diameter of the complex tungsten oxide particles of the present embodiment is preferably 800 nm or less, more preferably 200 nm or less, and even more preferably 100 nm or less. The lower limit value of the average particle diameter of the complex tungsten oxide particles of the present embodiment is not particularly limited, yet is preferably, for example, 1 nm or greater, more preferably 5 nm greater, and even more preferably 10 nm or greater.

For the above reasons, the average particle diameter of the complex tungsten oxide particles is preferably 1 nm or greater and 800 nm or less, more preferably 5 nm or greater and 200 nm or less, even more preferably 10 nm or greater and 200 nm or less, and yet more preferably 10 nm or greater and 100 nm or less.

The average particle diameter of the complex tungsten oxide particles is calculated based on the measurement of the particle diameter of each complex tungsten oxide particle from a transmission electron microscope image. Specifically, three fields of view are selected at a magnification that would include 200 or more complex tungsten oxide particles in one field of view, the image of the complex tungsten oxide particles is binarized in each field of view, and the average particle diameter is calculated based on image analysis. The upper limit of the number of complex tungsten oxide particles in one field of view is not particularly limited, yet, for example, the magnification may be selected such that 500 or less complex tungsten oxide particles are included in one field of view. Further, although all complex tungsten oxide particles in the three fields of view may be evaluated, for example, 500 or more and 800 or less particles may be selected, and 600 or more and 700 or less particles may even be selected, as a total of the three fields of view.

Specifically, an equivalent circle diameter is calculated from the area of each complex tungsten oxide particle, and is used as the particle diameter of the complex tungsten oxide particle. Then, the particle diameters of all the complex tungsten oxide particles evaluated are summed and divided by the number of particles evaluated. In this way, the average particle diameter can be calculated. That is, the average particle diameter can be defined as the arithmetic mean of the particle diameters of the complex tungsten oxide particles evaluated.

(3) Atomic Number (Z)-Contrast of Tungsten Atom in Complex Tungsten Oxide Particles

In a STEM-High-Angle Annular Dark Field (STEM-HAADF) image with the beam incident along [001], it is preferable that the complex tungsten oxide particles of the present embodiment have dark regions accounting for, as a number ratio, 0.01% or greater and 10% or less, more preferably 0.1% or greater and 10% or less, and even more preferably 0.2% or greater and 10% or less in terms of the atomic number (Z) contrast (hereinafter also referred to as "Z-contrast") of tungsten atom. The STEM-HAADF image of the complex tungsten oxide particles with the beam incident along [001] is an image in which a basal plane of the complex tungsten oxide is observed.

According to the present inventor's study, the complex tungsten oxide particles can particularly enhance the visible light transmission performance and the infrared-shielding performance by appropriately containing a small amount of oxygen defects that are difficult to confirm by an XRD pattern or the like.

Then, by having 10% or less of dark regions in terms of the Z-contrasts of tungsten atoms (hereinafter also referred to as "W atoms"), the complex tungsten oxide particles can contain an amount of oxygen that oxidizes W remaining around a W-defective region and that allows oxygen defects to be contained in a non-excessive amount. When the complex tungsten oxide particles have 0.01% or greater of dark regions in terms of the Z-contrast of W atoms, oxygen defects can be introduced appropriately into the complex tungsten oxide particles.

A dark region in terms of the Z-contrast of W atom in the complex tungsten oxide particles indicates a W atom defect. A dark region in terms of the Z-contrast of W atom means a spot (point) in which the Z-contrast of W atom decreases to equal to or less than 95% of a reference value, when the average Z-contrast of the W atoms included in the observation field of view of a STEM-HAADF image of the complex tungsten oxide particles is regarded as the reference value.

When observing a STEM-HAADF image, particles that can be observed with the beam incident along [001] and that have a size of some tens of nanometers or greater can be selected from among dispersed complex tungsten oxide particles. The contrast of a W atom spot can be extracted by performing observation such that the observation field of view has a size of 20 nm square or greater and 50 nm square or less.

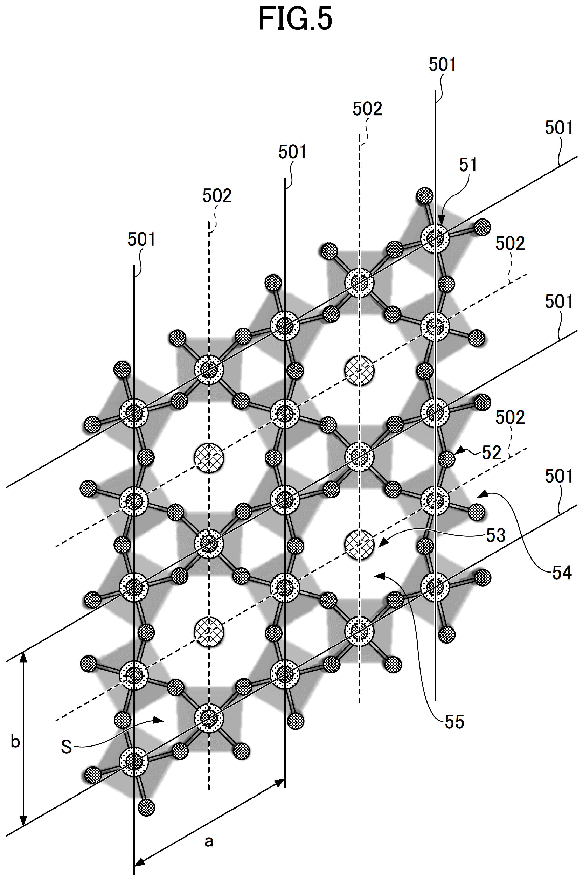

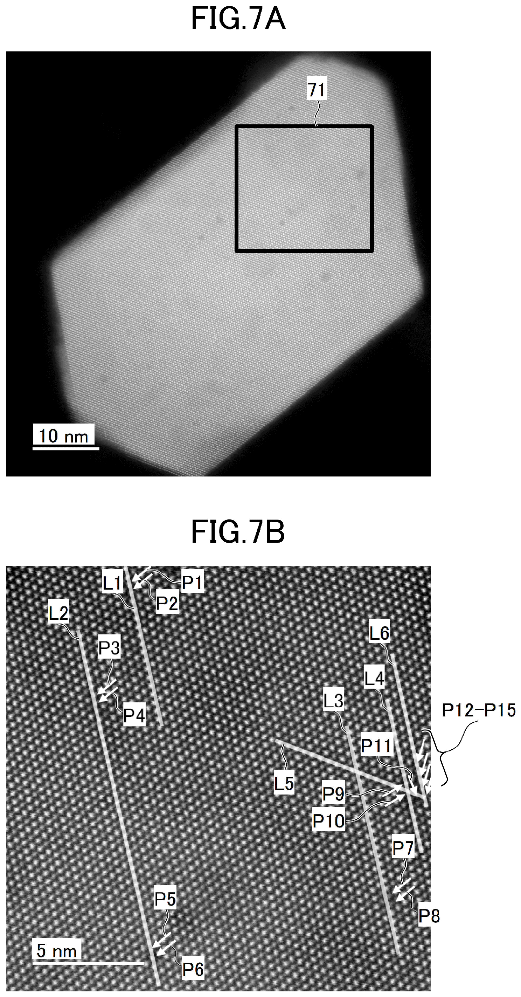

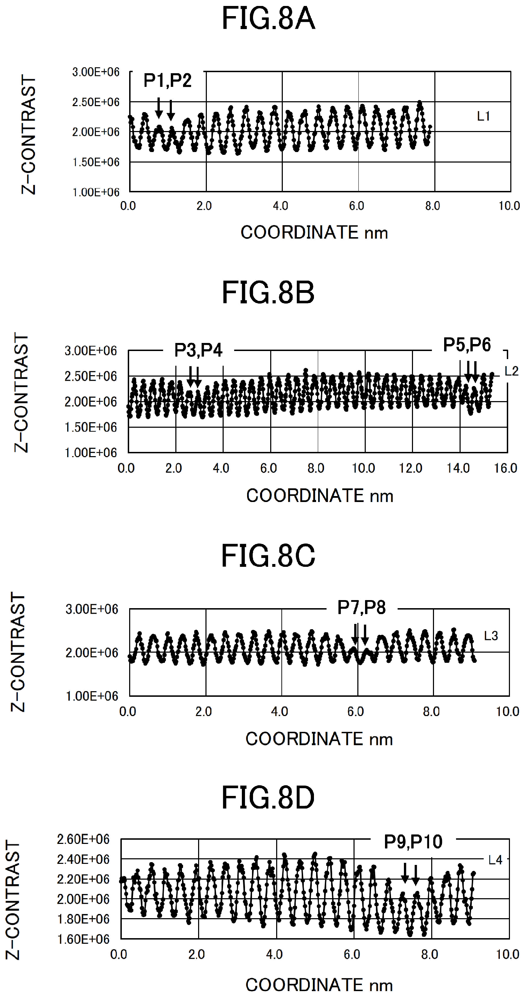

FIG. 5 shows the relationship between the crystal structure of a (001) plane of a hexagonal crystal $Cs_{0.33}WO_3$ and W atom/W atom rows (hereinafter also referred to as "W/W rows"). FIGS. 7A and 7B show STEM-HAADF images of $Cs_{0.33}WO_3$ particles obtained in Example 1. FIGS. 8A to 8F show the Z-contrasts of W atoms in the W atom/W atom rows on lines L1 to L6 shown in FIG. 7B.

The spots at which dark regions in terms of the Z-contrast of W atom are confirmed, such as points P1 and P2 in FIG. 7B, have weak contrasts, and these spots indicate W atom defects. In FIG. 7B, the tips of the arrows denoted by the reference numerals, such as P1 and the like, indicate the dark region points.

The Z-contrast of W atom can be known from an image (STEM-HAADF) obtained by detecting only transmitted electrons that are scattered at large angles, among electrons transmitted through the sample when the sample is STEM-HAADF-observed with a scanning transmission electron microscope. Here, since the size of a scattering angle is proportional to the second power of the atomic number (Z), an element with a greater atomic number has a brighter contrast. Therefore, contrasts attributable to differences in composition and element can be obtained. In the case of the complex tungsten bronze, it is possible to distinguish between the element M, such as Cs and the like, and the W atom by the difference in contrast.

In the present embodiment, the difference in contrast intensity in tungsten columns (W columns), which are spots (points) in which tungsten is located in a STEM-HAADF image, is used for distinguishing between a W-atom-defective site and a W-atom-non-defective site. If a W atom is defective, the maximum value of the Z-contrast at the spot decreases. A W atom-defective site on a (001) plane of the hexagonal crystal $Cs_{0.33}WO_3$ is indicated by a contrast lower than the average Z-contrast value of W atom/W atom row spots in which W atoms are located. The spot forms a W atom-defective region elongated in a pillar shape in the (001) direction. At the largest, such a site extends by 10 nm or greater in the (001) direction. On the (001) plane, no W atom defects continuous for 5 nm or greater are confirmed.

The Z-contrast of W atoms being confirmed in a STEM-HAADF image of the complex tungsten oxide particles with the beam incident along [001] will be explained based on the process of synthesizing the complex tungsten oxide particles of the present embodiment.

A (001) plane of the hexagonal crystal complex tungsten oxide will be described in terms of the crystal structure. As shown in FIG. 5, when six octahedrons 54, each of which is composed of a W atom 51 and six O atoms 52 as a unit, i.e., each of which has O atoms on the vertices and a W atom 51 in the center, are assembled, a hexagonal void (tunnel) 55 composed of O atoms 52 is formed. In FIG. 5, circles with the same hatching mean the same type of atom.

When an element M 53 is located in the hexagonal void 55 composed of O atoms 52, one unit is formed. Further, when a multitude of this one unit are assembled, a hexagonal crystal structure is formed. The hexagonal void 55 is parallel with the (001) plane. The (001) plane is perpendicular to the c-axis. By observing the (001) plane, it is possible to discern the difference between the element M 53 and the W atom 51 crystallographically.

Changes in the crystal structure of the particles in the synthesis process will be described based on an example in which the complex tungsten oxide particles of the present embodiment are $Cs_{0.33}WO_3$ particles. The complex tungsten oxide particles of the present embodiment are produced through a raw material preparation step, an aerosol formation step, a heat treatment step, and a reduction treatment step, as described later. The raw material aerosolized in the aerosol formation step is rapidly heated to 500°C or higher in the heat treatment step to promote a reaction for changing the raw material into the complex tungsten oxide in a short heating time. Then, after being heated, the resulting product is rapidly cooled to stop the reaction for changing the raw material into the complex tungsten oxide. The complex tungsten oxide particles obtained through the heat treatment step contain a hexagonal crystal ($Cs_{0.33}WO_3$) and heterogeneous phases ($Cs_4W_{11}O_{35}$, $(Cs_2O)_{0.44}WO_6$, and the like). From observation of a STEM-HAADF image of the complex tungsten oxide particles, it is confirmed that the complex tungsten oxide particles contain a large amount of W atom defects. These W atom-defective sites are Cs-excessive regions and contribute to formation of heterogeneous phases.

The complex tungsten oxide particles containing heterogeneous phases, obtained through the heat treatment step, will undergo relocation of the Cs atoms serving as the element M, the W atoms, and the O atoms in the reduction treatment step in which oxygen is not supplied. As a result of the relocation of the atoms, the complex tungsten oxide particles are changed into complex tungsten oxide particles that are observed to have dark regions in terms of the Z-contrast of W atom during observation of a STEM-HAADF image with the beam incident along [001]. The dark regions in terms of the Z-contrast of W atom in the STEM-HAADF image, with the beam incident along [001], of the complex tungsten oxide particles that have undergone the reduction treatment step are estimated to be the traces of the above-mentioned heterogeneous phases and W atom defects.

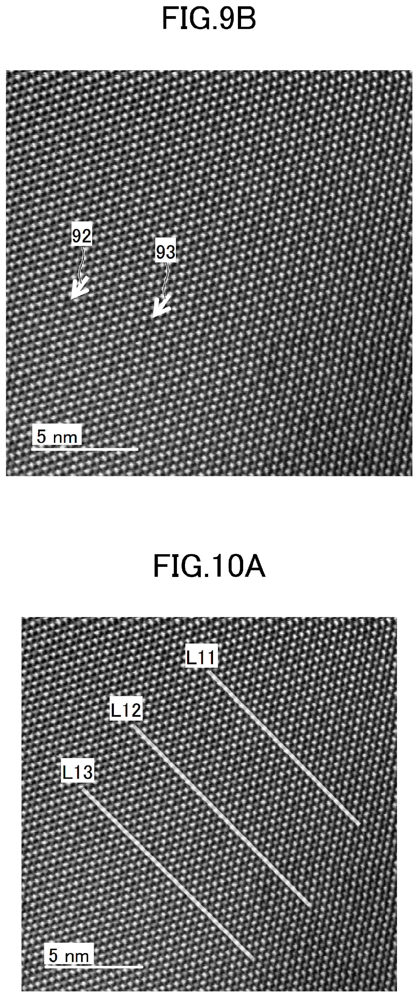

On the other hand, as shown by Comparative Example 1 to be described later, when synthesizing complex tungsten oxide particles by heating the raw material under a reducing atmosphere for a longer time than in Example 1 without aerosolizing the raw material, hexagonal single-phase complex tungsten oxide particles are obtained, through adjustment of the atmosphere and heating conditions. When a STEM-HAADF image of complex tungsten oxide particles prepared without aerosolizing the raw material, with the beam incident along [001], is observed, dark regions in terms of the Z-contrasts of W atoms are substantially not confirmed, as shown in FIG. 9B, which shows the evaluation result of Comparative Example 1.

The complex tungsten oxide particles of the present embodiment may also contain a defective plane in the direction perpendicular to the c-axis in a STEM-HAADF image of the complex tungsten oxide particles with the beam incident along [110] (prism plane).

The defective plane may be generated by W atom defect. Furthermore, a space in which atoms of the element M, such as cesium and the like, and W atoms are absent might be present in the c-axis direction.

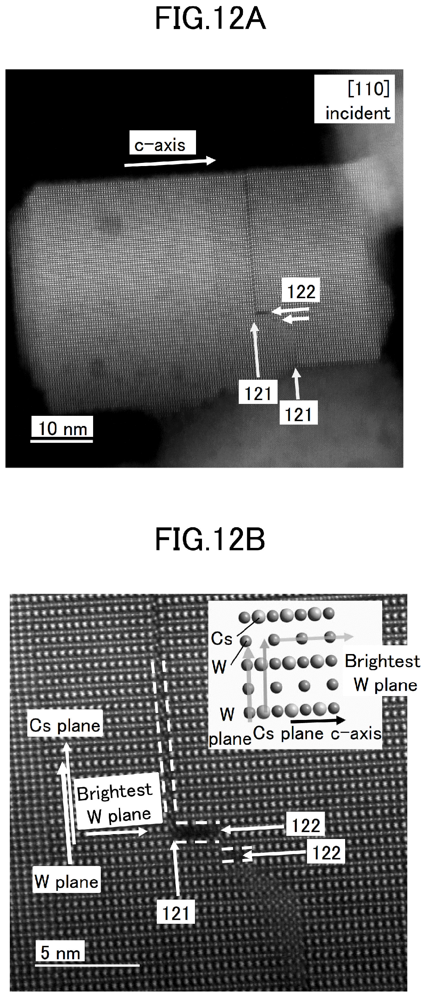

FIGS. 12A and 12B are STEM-HAADF images of the complex tungsten oxide particles of Example 1 with the bream incident along [110]. In FIG. 12A, it was confirmed that defective planes 121 having a length of approximately 30 nm, which were basal plane defects generated by W atom defects, were present in the direction perpendicular to the c-axis. In addition, it was confirmed that spaces 122 having a length of approximately 3 nm, in which Cs atoms and W atoms were absent, were present in the c-axis direction.

FIG. 12B is an enlarged view of FIG. 12A. The defective planes 121, which were basal plane defects, and the spaces 122 along the c-axis direction, in which Cs and W were absent, were considered to have remained as the interfaces to the regions that were crystallized when Cs and W atoms were relocated in the crystal in the heat treatment step.

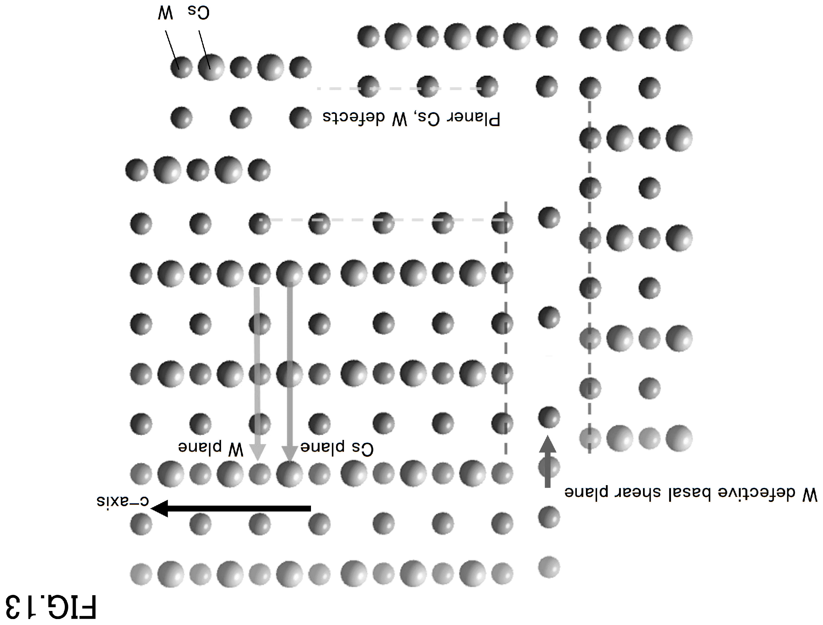

In addition, it was confirmed that there was a distorted structure in which, at intervals of 1/4 period, the crystal structure was out of alignment across the defective plane 121 generated by the W atom defect and having a length of approximately 30 nm in the direction perpendicular to the c-axis. FIG. 13 schematically shows the locations of W atoms and Cs atoms in FIGS. 12A and 12B.

From the complex tungsten oxide particles of the present embodiment, as described above, dark regions in terms of the Z-contrasts of W atom in the STEM-HAADF image with the beam incident along [001], which are estimated to be traces of W atom defects before the reduction treatment step, are observed. It can be confirmed that the complex tungsten oxide particles of the present embodiment before being subjected to the reduction treatment step of the synthesis process contain a large amount of W atom defects. These W atom-defective sites are Cs-excessive regions, which contribute to formation of heterogeneous phases other than the hexagonal crystal. Then, when the reduction treatment step causes W atoms to be relocated to assume a hexagonal crystal structure, defective planes, that is, basal plane (001) defects, may occur in the direction perpendicular to the c-axis. It is considered that the presence of these defects promotes relocation of W atoms in the reduction treatment step, in which the W atoms try to maintain a hexagonal structure. It is considered that, in the process of the relocation of W atoms in which the W atoms try to maintain a hexagonal crystal structure, W atom defects (defective planes) are generated in a prism plane, to thereby maintain a hexagonal crystal structure at the sites at which no defects are generated.

As described above, in the hexagonal-crystal complex tungsten oxide, it is considered that, theoretically, when the value of x/y is 0.33 when z/y=3 is satisfied, the number of atoms of the element M that are located becomes the largest. Note that x, y, and z in the above description and the following description mean x, y, and z in the general formula of the complex tungsten oxide particles described above. The ratio of the element M to the element W by number of moles is in the range of $0.20 \leq x/y \leq 0.37$, preferably $0.25 \leq x/y \leq 0.37$, and more preferably $0.30 \leq x/y \leq 0.36$. When the ratio of the element M by number of moles is in the range of $0.20 \leq x/y \leq 0.37$, it is possible to obtain complex tungsten oxide particles having excellent infrared absorption characteristics by maintaining the hexagonal crystal structure, even if defects might be generated in the prism planes through relocation of W atoms. When the amount of the element M is small, as in the case where x/y is, for example, less than 0.20, a hexagonal crystal structure is hardly formed, and even if a hexagonal crystal structure is formed, there are few free electrons that are supplied to the 5d orbitals of the W atoms, which would result in poor infrared absorption characteristics.

On the other hand, when the ratio (x/y) of the element M to the element W by number of moles is greater than 0.37, the element M is excessive, and many W atom defects are generated in the basal planes as well as in the prism planes, and heterogeneous phases, such as a pyrochlore phase and the like, are generated in addition to the hexagonal phase, resulting in poor infrared absorption characteristics. These defects in the basal planes are planar or band-like defects having a length of 10 nm or greater in the (001) direction.

According to the study conducted by the inventor of the present invention, band-like defects are observed in a STEM-HAADF image (basal plane image) with the beam incident along [001] of complex tungsten oxide particles in which the ratio (x/y) of the element M to the element W by number of moles is greater than 0.37 . These band-like defects are planar W atom defects parallel with the c-axis. This phenomenon occurs because the number of element M atoms is excessive relative to the number of W atoms. Due to the excess element M atoms, heterogeneous phases, such as a pyrochlore phase and the like, are generated, as well as a hexagonal crystal phase, in the process of relocation of W atoms, and a band-like W atom defect with a length exceeding 10 nm is also generated in the basal planes of the complex tungsten oxide particles. When a W atom-defective region having a length of 10 nm or greater is once formed, defective regions start to be formed periodically, which is considered to stabilize the heterogeneous phases, such as a pyrochlore phase and the like.

In a case of industrially synthesizing the complex tungsten oxide particles of the present embodiment, the element M source and the element W source might be blended in an imbalanced manner in the raw material preparation step described later. In this case, the ratio (x/y) of the element M to the element W by number of moles might become greater than 0.37 in some part, and a band-like W atom defect with a length exceeding 10 nm might be generated in the basal plane of some of the obtained complex tungsten oxide particles. However, if the ratio of particles with such defects by number is less than 20%, infrared absorption characteristics are not poor.

(4) Evaluation of Complex Tungsten Oxide Particles by XPS

The W atoms of the infrared-absorbing complex tungsten oxide particles assume electronic states of $W^{5+}$ attributable to oxygen vacancies and of $W^{6+}$. Oxidization states can be evaluated by separating the 4f orbital intensities of the W atoms in the XPS spectrum into intensities attributable to $W^{6+}$ and $W^{5+}$. By separating the XPS spectrum, it is possible to confirm that the complex tungsten oxide particles according to Example 1, which are an example of the complex tungsten oxide particles of the present embodiment, are more oxidized than the complex tungsten oxide particles synthesized by the solid phase method mentioned in Comparative Example 1.

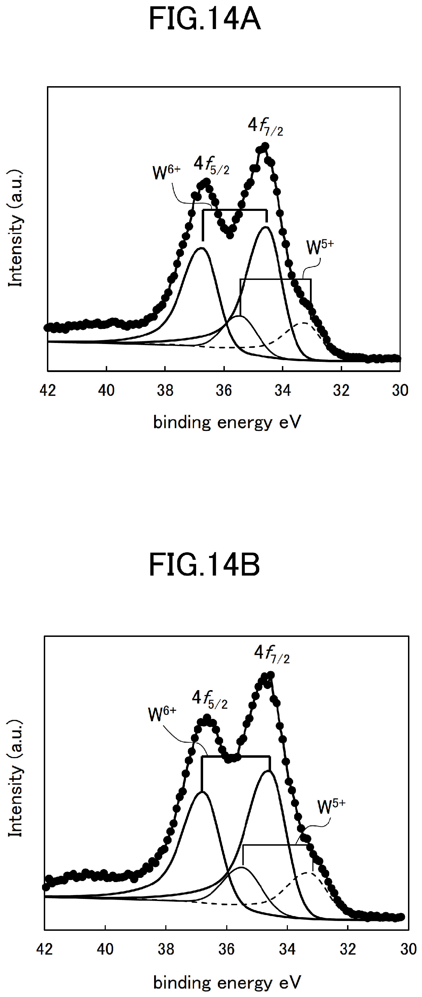

FIG. 14A is a 4f profile of the W atoms of the cesium tungsten composite oxide particles according to Example 1 by XPS. FIG. 14B is a 4f profile of the W atoms of the cesium tungsten composite oxide particles according to Comparative Example 1 by XPS.

In a hexagonal-crystal cesium tungsten composite oxide, $W^{6+}$ has a $4f_{7/2}$ peak in the binding energy range of 34 eV to 36 eV and a $4f_{5/2}$ peak in the binding energy range of 36 eV to 38 eV. $W^{5+}$ has a $4f_{7/2}$ peak in the binding energy range of 32 eV to 34 eV and a $4f_{5/2}$ peak in the binding energy range of 35 eV to 37 eV.

Based on this knowledge, XPS peak separation can be performed by performing fitting with a profile that is measured by the least square method while being modeled with respect to a Gaussian distribution or a Lorentzian distribution with the peak interval between $W4f_{7/2}$ and $W4f_{5/2}$ fixed to 2.18 eV and the peak area ratio fixed to 0.75. By knowing the occupation ratio of the intensity of $W^{5+}$ in the sum of the intensities of $W^{6+}$ and $W^{5+}$ by XPS, it is possible to know the oxidization state of the W atoms of the complex tungsten oxide particles. In the peak separation, the background of the profile was removed, to match the half-value widths of $W4f_{7/2}$ and $W4f_{5/2}$.

In the complex tungsten oxide particles of Example 1, the occupation ratio of $W^{5+}$ in the sum of the intensities of $W^{6+}$ and $W^{5+}$ was 24.9%, while in the complex tungsten oxide particles of Comparative Example 1, it was 25.96%. According to the separation of the intensities of $W^{6+}$ and $W^{5+}$ by XSP, the complex tungsten oxide particles of Example 1, whose profile is shown in FIG. 14A, have a lower $W^{5+}$ ratio, i.e., a higher $W^{6+}$ ratio than that of, that is, are more oxidized than, the complex tungsten oxide particles of Comparative Example 1 shown in FIG. 14B.

The reason the occupation of $W^{5+}$ is less and the oxidization degree is greater in Example 1 is estimated to be because W atoms in the crystal are stabilized by binding with oxygen because of the presence of W defects formed in the c-axis direction or the basal plane direction as shown in FIGS. 7A and 7B or FIGS. 12A and 12B.

Although the above example is only one example, as described above, the complex tungsten oxide particles of the present embodiment can be produced by aerosolizing the raw material and then subjecting the resulting product to heat treatment or the like. The complex tungsten oxide particles produced by the production method involving the aerosolization of the raw material tend to be more oxidized than complex tungsten oxide particles obtained by a synthesis by the conventionally known solid phase method, followed by grinding and the like.

(5) Peak Separation and Integrated Intensity of Localized Surface Plasmon Absorption and Polaron Absorption of Complex Tungsten Oxide Particles

The oxidization state of the complex tungsten oxide particles of the present embodiment affects the optical characteristics. A molar absorptivity curve will be studied based on an absorption curve of a dispersion liquid of the complex tungsten oxide particles obtained by a spectrophotometer. The causes of absorptions on an absorption curve are the localized surface plasmon absorption and the polaron absorption of the particles, and these absorptions combine into an absorption curve.

In the case of the complex tungsten oxide, the localized surface plasmon absorption shows anisotropy with respect to the c-axis. Specifically, in the case of the complex tungsten oxide particles, the localized surface plasmon absorption includes localized surface plasmon resonance absorption in a direction perpendicular to the c-axis (LSPR⊥) and localized surface plasmon resonance absorption in a direction parallel with the c-axis (LSPR//).

Specifically, the complex tungsten oxide particles have three absorption elements, namely, absorption due to the localized surface plasmon resonance in the direction perpendicular to the c-axis (perpendicular direction) (LSPR⊥), absorption due to the localized surface plasmon resonance in the direction parallel with the c-axis (parallel direction) (LSPR//), and the polaron absorption. Therefore, the molar absorptivity curve of the complex tungsten oxide particles can be separated into three absorption curves.

Specifically, the wavelength on the horizontal axis of the molar absorptivity curve is converted into energy (eV), and the molar absorptivity curve is fitted with a Gaussian distribution and a Lorentzian distribution based on the Mie scattering theory, and then separated into an absorption curve of the absorption due to localized surface plasmon resonance in the direction perpendicular to the c-axis (LSPR⊥), an absorption curve of the absorption due to localized surface plasmon resonance in the direction parallel with the c-axis (LSPR//), and an absorption curve of the polaron absorption.

When, in the separation of the molar absorptivity curve, the absorption curve of the absorption due to the localized surface plasmon resonance in the direction perpendicular to the c-axis (LSPR⊥), the absorption curve of the absorption due to the localized surface plasmon resonance in the direction parallel with the c-axis (LSPR//), and the absorption curve of the polaron absorption are obtained, the mean values (peak energies (wavelengths)) of a Gaussian distribution and a Lorentzian distribution are found. Each Gaussian distribution is represented by an equation (1).

[Math. 1]

$$\sigma_g = A exp\left\{-\frac{(E-b)^2}{2c^2}\right\}$$

---(1)

In the equation (1), A is the peak intensity, b is the mean value, E is the energy, and c is the standard deviation.

The Lorentzian distribution is expressed by an equation (2).

[Math. 2]

$$\sigma_R = \frac{1}{\pi}\frac{d}{(E-b)^2 + d^2}$$

---(2)

In the equation (2), E is the energy, b is the mean value, and d is a constant.

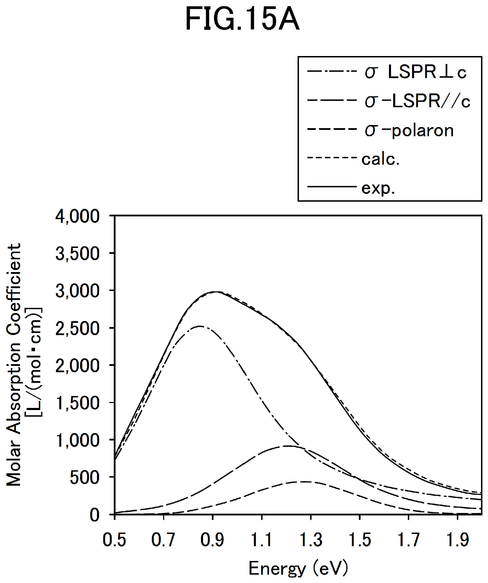

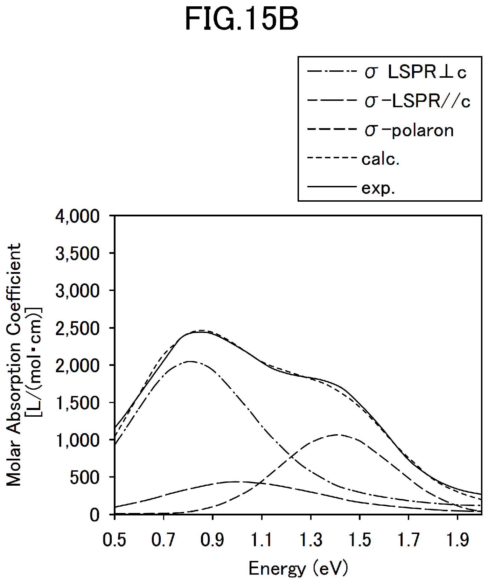

FIGS. 15A and 15B show the results of separating the absorption curve in the range of 0.5 eV or greater and 2.0 eV or less (a wavelength range of 620 nm or greater and 2,500 nm or less) by using these functions. The near-infrared region (a wavelength range of 780 nm or greater and 2,500 nm or less) corresponds to 0.5 eV or greater and 1.59 eV or less.

FIG. 15A shows a molar absorptivity curve of the complex tungsten oxide particles according to Example 1, which is an example of the complex tungsten oxide particles according to the present embodiment. FIG. 15B shows a molar absorptivity curve of the complex tungsten oxide particles according to Comparative Example 1, which is an example of complex tungsten oxide particles obtained by a synthesis by the conventionally known solid phase method, followed by grinding. Table 2 shows peak positions, peak intensities, and integrated intensities of the absorption curves of the three absorption elements. Table 3 shows the ratios of the integrated intensities of the absorption curves of the three absorption elements with respect to the integrated intensity of the molar absorptivity curve.

FIGS. 15A and 15B are examples, and the molar absorptivity curve in each diagram is an example and non-limiting. Yet, the complex tungsten oxide particles of the present embodiment show a tendency similar to the molar absorptivity curve shown in FIG. 15A.

In the complex tungsten oxide particles of Example 1 shown in FIG. 15A, the absorption peak on the absorption curve of the localized surface plasmon resonance in the direction perpendicular to the c-axis (LSPR⊥) is 0.86 eV (a wavelength of 1,435 nm), and the integrated intensity of the absorption curve is 96,015.38 [L·eV/(mol·cm)].

In the molar absorptivity curve shown in FIG. 15A, the absorption peak on the absorption curve of the localized surface plasmon resonance in the direction parallel with the c-axis (LSPR//) is 1.20 eV (a wavelength of 1,030 nm), and the integrated intensity of the absorption curve is 33,042.00 [L·eV/(mol·cm)].

In the molar absorptivity curve shown in FIG. 15A, the absorption peak on the absorption curve of the polaron absorption is 1.26 eV (a wavelength of 985 nm), and the integrated intensity of the absorption curve is 12,265.60 [L·eV/(mol·cm)].

Among the integrated intensities of the three absorption curves of the molar absorptivity curve shown in FIG. 15A, the ratio of the integrated intensity of the absorption curve of the polaron absorption is 8.7%. The complex tungsten oxide particles of Example 1 were synthesized by aerosolization followed by heat treatment or the like, and the integrated intensity of the polaron absorption is lower as compared with the complex tungsten oxide particles synthesized by the conventionally known solid phase method.

On the other hand, FIG. 15B shows the molar absorptivity curve of the complex tungsten oxide particles according to Comparative Example 1, which were obtained by a synthesis by the conventionally known solid phase method followed by grinding. In the molar absorptivity curve shown in FIG. 15B, the absorption peak on the absorption curve of the localized surface plasmon resonance in the direction perpendicular to the c-axis (LSPR⊥) is 0.80 eV (a wavelength of 1,550 nm), and the integrated intensity of the absorption curve is 78,843.30 [L·eV/(mol·cm)].

In the molar absorptivity curve shown in FIG. 15B, the absorption peak on the absorption curve of the localized surface plasmon resonance in the direction parallel with the c-axis (LSPR//) is 1.00 eV (a wavelength of 1,240 nm), and the integrated intensity of the absorption curve is 20,209.67 [L·eV/(mol·cm)].

In the molar absorptivity curve shown in FIG. 15B, the absorption peak on the absorption curve of the polaron absorption is 1.40 eV (a wavelength of 885 nm), and the integrated intensity of the absorption curve is 31,174.01 [L·eV/(mol·cm)].

Among the integrated intensities of the three absorption curves in the molar absorptivity curve shown in FIG. 15B, the ratio of the integrated intensity of the absorption curve of the polaron absorption is 23.9%.

As is clear from the comparison of the ratios of the integrated intensities of the absorption curves of the polaron absorption, the complex tungsten oxide particles of Example 1 have a polaron absorption weaker than that of the complex tungsten oxide particles of Comparative Example 1. This is also indicated by the fact that the peak value of the absorption curve of the polaron absorption of the complex tungsten oxide particles of Example 1 appearing at 1.26 eV (a wavelength of 985 nm) is weaker than the peak value of the polaron absorption of the complex tungsten oxide synthesized by the solid-phase method, appearing at 1.40 eV (a wavelength of 885 nm).

Furthermore, the complex tungsten oxide particles of Example 1 have larger ratios of the integrated intensities of the absorption curves of LSPR⊥ and LSPR//, which are the absorptions due to the localized surface plasmon resonance. In particular, the ratio of the integrated intensity of the absorption curve of LSPR// of the complex tungsten oxide particles of Example 1 is greater than the ratio of the integrated intensity of the absorption curve of LSPR// of the complex tungsten oxide particles of Comparative Example 1 obtained by a synthesis by the solid phase method followed by grinding. These differences in the absorption states appear as optical characteristics.

Here, the integrated intensity of each of the three absorption curves is the integrated intensity in the range of 0.5 eV or greater and 2.0 eV or less (a wavelength range of 620 nm or greater and 2,500 nm or less). By comparing the integrated intensities of the three absorption elements, including the localized surface plasmon resonance in the direction perpendicular to the c-axis (LSPR⊥), the localized surface plasmon resonance in the direction parallel with the c-axis (LSPR//) and the polaron absorption in the above-mentioned range, it is possible to know the contributions of the three absorption elements in the near-infrared region (a wavelength range of 780 nm or greater and 2,500 nm or less).

The localized surface plasmon resonance in the direction perpendicular to the c-axis, the localized surface plasmon absorption in the direction parallel with the c-axis, and the polaron absorption exhibit, in the stated order, a peak absorption on the lower energy side. That is, the absorption due to the polaron appears in the high energy region (on the short wavelength side in the near-infrared region).

It is known that the polaron absorption by complex tungsten oxide particles is attributable to $W^{5+}$ of W atoms in the crystal constituting the particles. As shown by the above XPS results, the complex tungsten oxide particles of the present embodiment contain less $W^{5+}$ attributable to oxygen defects. Therefore, when peak separation of the molar absorptivity curve is performed, the ratio of polaron absorption by the complex tungsten oxide particles of the present embodiment is lower than that by the conventionally known complex tungsten oxide particles.

Because the integrated intensity or the peak value of the absorption curve of the localized surface plasmon absorption of the complex tungsten oxide particles of the present embodiment in the direction parallel with the c-axis is higher than the integrated intensity or the peak value of the polaron absorption thereof, the complex tungsten oxide particles of the present embodiment exhibit an abrupt infrared absorption around a wavelength of 1,000 nm. That is, although having a weak polaron absorption-attributable absorption of light around a wavelength of 800 nm, the complex tungsten oxide particles of the present embodiment have an infrared-absorption effect around a wavelength of 1,000 nm. On the other hand, as shown in FIG. 15B, the integrated intensity or the peak value of the absorption curve of the polaron absorption of the complex tungsten oxide particles synthesized by the conventionally known solid phase method is higher than the integrated intensity or the peak value of the absorption curve of the localized surface plasmon absorption thereof in the direction parallel with the c-axis. This difference appears in the hue of transmitted light, and a dispersion liquid or a dispersion of the complex tungsten oxide particles of the present embodiment can transmit light having a neutral hue. In addition, the complex tungsten oxide particles of the present embodiment can exhibit excellent characteristics in the visible light transmission performance and the near-infrared-shielding performance.

Furthermore, the molar absorptivity of a powder composed of complex tungsten oxide particles in a dispersion liquid can be known from the molar absorptivity curve. The molar absorptivity of a powder composed of the complex tungsten oxide particles of the present embodiment is preferably 2,600 L/(mol·cm) or greater, and more preferably 2,800 L/(mol·cm) or greater.

Through adjustment of the production conditions, even the conventionally known complex tungsten oxide particles can have a peak value of the absorption curve of the polaron absorption that is lower than the peak value of the absorption curve of the localized surface plasmon absorption in the direction parallel with the c-axis.

However, when the peak value of the absorption curve of the polaron absorption of the conventionally known complex tungsten oxide particles is lower than the peak value of the absorption curve of the localized surface plasmon absorption thereof in the direction parallel with the c-axis, the molar absorptivity thereof becomes less than 2,000 L/(mol·cm). It is desirable that infrared-absorbing materials have a high molar absorptivity, and a high molar absorptivity enables even a small amount of an infrared-absorbing material to exhibit an excellent infrared-shielding effect.

Because of the crystal structure and the electron state of the complex tungsten oxide, the complex tungsten oxide particles of the present embodiment can be obtained as complex tungsten oxide particles having an infrared-absorbing ability better than that of complex tungsten oxide particles obtained by synthesis by the conventionally known solid phase method followed by grinding, exemplified by Comparative Example 1.

The complex tungsten oxide particles of the present embodiment can impart an infrared-absorbing function to a fiber by being located at one or more locations selected from the interior of the fiber or the surface of the fiber.

When a light transmission profile of a dispersion liquid obtained by dispersing the complex tungsten oxide particles of the present embodiment in a solvent is measured by a spectrophotometer, the bottom transmittance in the near-infrared region can be measured to be 5% or lower even when the peak transmittance in the wavelength region of 500 nm or greater and 600 nm or less is 75% or higher. That is, the dispersion liquid of the complex tungsten oxide particles of the present embodiment has an excellent infrared-shielding effect (infrared-absorbing effect). Therefore, the amount of complex tungsten oxide particles to be added to an infrared-absorbing fiber and a fiber product according to the present embodiment, which is necessary for the infrared-absorbing fiber and the fiber product to exhibit a function for preventing secret filming by an imaging device, such as a CCD camera and the like, can be reduced compared with the case of using the conventionally known complex tungsten oxide particles.

Furthermore, the dispersion liquid of the complex tungsten oxide particles according to the present embodiment can also transmit red light around a wavelength of 800 nm as compared with a dispersion liquid of the complex tungsten oxide particles shown in Comparative Example 1. Therefore, the dispersion liquid of the complex tungsten oxide particles according to the present embodiment can contribute to improving the hue of an infrared-absorbing fiber using the complex tungsten oxide particles.

[Method for Producing Complex Tungsten Oxide Particles]

An outline of a method for producing complex tungsten oxide particles according to the present embodiment will be described.

Since the complex tungsten oxide particles described above can be produced according to the method for producing complex tungsten oxide particles according to the present embodiment, descriptions of any particulars that have already been described will be omitted. Here, a configuration example of the method for producing complex tungsten oxide particles is merely shown, and the method for producing the complex tungsten oxide particles described above is not limited to the following configuration example.

The method for producing complex tungsten oxide particles of the present embodiment is preferably a method that can directly synthesize complex tungsten oxide particles having a particle diameter of 1 μm or less. As long as it is possible to directly synthesize complex tungsten oxide particles having a particle diameter of 1 μm or less, it is possible to obtain minute particles, for example, complex tungsten oxide particles having a particle diameter of 800 nm or less, that are less damaged by grinding or dispersion.

The method for directly synthesizing complex tungsten oxide particles having a particle diameter of 1 μm or less is preferably a method for synthesizing the particles through a heat treatment step of supplying an aerosol of a raw material containing an element M source and a tungsten element source to an electric furnace, a flame, or a plasma.

Therefore, the method for producing complex tungsten oxide particles of the present embodiment can include a raw material preparation step, an aerosol formation step, a heat treatment step, and a reduction treatment step described below.

In the raw material preparation step, a raw material containing an element M source and a tungsten element source can be prepared.

In the aerosol formation step, the raw material prepared in the raw material preparation step can be aerosolized.

In the heat treatment step, the aerosolized raw material can be heat-treated in a reaction field.

In the reduction treatment step, the particles obtained in the heat treatment step can be subjected to a reduction treatment in an atmosphere containing a reducing gas.

(1) Steps

Each step of the method for producing complex tungsten oxide particles of the present embodiment will be described below.

(1-1) Raw Material Preparation Step

In the raw material preparation step, a raw material containing an element M source and a tungsten element source (hereinafter also referred to as "element W source") can be prepared.

In the raw material preparation step, the raw material can be blended and prepared such that the ratio between the number of moles of the element M and the number of moles of the element W contained in the raw material becomes suited to the target composition of the complex tungsten oxide particles.

The state of the raw material prepared in the raw material preparation step is not particularly limited, and may be a liquid or a powder, from which it is preferable to form an aerosol by spraying and the like. The aerosol means a mixture of minute liquid or solid particles floating in a gas and the surrounding gas.

When the raw material is liquid, the raw material can be prepared by, for example, preparing a solution containing the element M source and the element W source.

Alternatively, a solution containing the element M source and a solution containing the element W source may be prepared in advance, and both solutions may be mixed in the raw material preparation step to form a raw material mixture solution, which is the raw material.

For example, the raw material may be supplied in the form of liquid droplets to the heat treatment step described later. In this case, the raw material preparation step can be performed by mixing the solution containing the element M source and the solution containing the element W source immediately before supplying the solutions to a liquid droplet forming section (liquid droplet forming part) or in the liquid droplet forming section. In the liquid droplet forming section, the aerosol formation step described later can be performed.

For example, when a problem, such as gelation or the like, is caused by previously mixing the solution containing the element M source and the solution containing the element W source, it is preferable to prepare both solutions in advance and mix them immediately before the aerosol formation step as described above. When the raw material preparing step is performed immediately before the aerosol formation step, it is possible to adjust the ratio by number of moles between the element M and the element W in the raw material to a desired range by adjusting the concentrations of both solutions and the liquid feeding rates at which both solutions are fed to the liquid droplet forming section.

When the raw material preparing step is performed immediately before the aerosol formation step as described above, the aerosol formation step and the raw material preparing step do not need to be clearly separated, and both steps can be performed continuously.

When mixing the solution containing the element M source and the solution containing the element W source in the raw material preparing step as described above, the specific method for mixing is not particularly limited, and any method can be used.

The element W source is not particularly limited, and any raw material containing tungsten may be used, such as the tungsten simple substance, tungsten compounds, and the like. As the element W source, tungsten salts and the like can be used, and, for example, hexacarbonyl tungsten can be preferably used. Hexacarbonyl tungsten can be expressed as, for example, $W(CO)_6$. As the solution containing the element W source, an organic solution containing the element W source can be preferably used from the viewpoint of ease of handling and the like.

The element M source is not particularly limited, and any raw material containing the element M may be used, such as the element M simple substance, compounds containing the element M, and the like. As the solution containing the element M source, for example, a solution of a salt containing the element M can be used. The type of the element M salt as the element M source is not particularly limited. For example, one or more selected from carbonate, acetate, nitrate, hydroxide and the like of the element M can be used.

As the solution containing the element M source, an ethanol solution containing the element M source can be suitably used from the viewpoint of ease of handling and the like.

For example, also in a case where the element M is cesium, one or more selected from carbonate, acetate, nitrate, hydroxide, and the like can be used as the salt of the element M source. Yet, acetate can be particularly preferably used. This is because cesium acetate is particularly easily dissolved in ethanol.

The ratio, i.e., the doping amount, of the element M to 1 mol of the tungsten element in the complex tungsten oxide to be obtained is determined by the ratio between the element W source and the element M source when forming the raw material mixture solution. Therefore, the doping amount can be controlled by, for example, the concentration of the solution containing the element W source, the concentration of the solution containing the element M source, and the like.

The concentration of the element W source contained in the solution containing the element W source, that is, the concentration of a salt or the like of the element W, is not particularly limited. For example, the tungsten concentration in the solution containing the element W source is preferably 0.001 mol/L or higher and 10 mol/L or lower, more preferably the tungsten concentration is 0.01 mol/L or higher and 10 mol/L or lower, and even more preferably the tungsten concentration is 0.01 mol/L or higher and 1 mol/L or lower. This is because when the tungsten concentration in the solution containing the element W source is 0.001 mol/L or higher, the amount of complex tungsten oxide particles produced per unit time can be sufficiently secured, and a sufficient amount thereof can be recovered by, for example, a filter and the like, thereby improving productivity. In addition, when the tungsten concentration in the solution containing the element W source is 10 mol/L or lower, re-precipitation of the dissolved element W source can be inhibited, agglomeration of generated particles can be inhibited, and inclusion of, for example, coarse complex tungsten oxide particles having a particle diameter greater than 1 $\mu$m can be inhibited. In addition, additives, such as a pH adjusting agent, a surfactant, and the like may be added to the solution containing the element W source.

The concentration of the element M source contained in the solution containing the element M source is not particularly limited, and may be selected in accordance with the desired composition of the complex tungsten oxide particles to be produced, the concentration of the element W source contained in the solution containing the element W source, and the like.

Optional components other than the solution containing the element W source and the solution containing the element M source may be added to the raw material mixture solution.

Although the case where the raw material is a liquid has been described as an example, the raw material may be a solid, and may be, for example, a powder. In the case where the raw material is a powder, the raw material can be prepared by mixing, for example, a powder of an element M compound and a powder of a tungsten compound. Further, for example, a precursor powder obtained by adding a tungsten compound powder to the solution containing the element M source, stirring the mixture, and removing the solvent by drying or the like may be used as the raw material.

When the raw material is a solid, the element W source is not particularly limited, and a salt or the like of tungsten can be used. For example, $H_2WO_4$ or ammonium paratungstate can be preferably used.

In $H_2WO_4$, the elements other than tungsten are H (hydrogen) and O (oxygen), and the elements other than tungsten are discharged out of the system in the heat treatment step described later. Therefore, $H_2WO_4$ can be suitably used as the element W source because it is possible to obtain complex tungsten oxide particles in which inclusion of impurities is inhibited.

As the element M source, for example, a powder of a salt containing the element M can be used. The type of the salt containing the element M is not particularly limited. Yet, for example, one or more selected from carbonate, acetate, nitrate, hydroxide, and the like of the element M can be used.

For example, also when the element M is cesium, one or more selected from carbonate, acetate, nitrate, hydroxide, and the like can be used. Yet, carbonate can be particularly preferably used.

(1-2) Aerosol Formation Step

In the method for producing the complex tungsten oxide particles of the present embodiment, it is preferable to supply the raw material prepared in the raw material preparation step to the heat treatment step in the state of an aerosol. Specifically, it is preferable to convey the aerosol by a carrier gas, such as oxygen and the like, and supply the aerosol to the heat treatment step.

Therefore, the method for producing complex tungsten oxide particles of the present embodiment may include the aerosol formation step of forming an aerosol of the raw material, containing liquid droplets or particles of the raw material.

The manner or method for forming the aerosol in the aerosol formation step is not particularly limited and can be selected in accordance with the state of the raw material and the like.

When the raw material is a liquid, the aerosol can be formed by spraying the liquid as the raw material toward the carrier gas using any of various atomizers, such as a centrifugal atomizer and the like, or a two-fluid nozzle. Further, liquid droplets can be formed by applying ultrasonic irradiation to the liquid.

When the raw material is a powder, the aerosol can be formed by a device that forms a dispersed state of the powder as the raw material and supplies the powder into an air stream. For example, the aerosol can be formed by an aerosol forming device including a stirring part, such as a rotating brush, a stirring blade, and the like, and a powder supply part including a piston, a screw feeder, and the like for feeding the raw material to the stirring part. The powder as the raw material supplied from the powder supply part is dispersed as particles constituting the powder by the stirring part, and the aerosol can be formed from the powder as the raw material by feeding each particle into the carrier gas. The stirring part can select the rotational speed of the brush or the stirring blade such that the powder as the raw material can be dispersed as particles, and it is preferable to rotate the brush or the stirring blade at a high speed.

When liquid droplets dispersed in a gas are formed in the aerosol formation step, the size of the liquid droplets to be formed is not particularly limited. Yet, the diameter of the liquid droplets is preferably 100 μm or less, more preferably 10 μm or less, and even more preferably 5 μm or less. By adjusting the diameter of the liquid droplets to 100 μm or less, it is possible to prevent the complex tungsten oxide particles to be obtained from coarsening, and to obtain complex tungsten oxide particles on the nanometer order. The lower limit value of the size of the liquid droplets formed in the aerosol formation step is not particularly limited. However, since forming excessively small liquid droplets is difficult and might reduce the productivity, the diameter is preferably, for example, 1 μm or greater.

When forming solid particles dispersed in a gas in the aerosol formation step, the size of the particles is not particularly limited. Yet, the diameter of the particles is preferably 100 μm or less, more preferably 10 μm or less, and even more preferably 3 μm or less. When the diameter of the particles is 100 μm or less, the particles can be heat-treated even to the interior of the particles more reliably. The diameter of the particles can be measured similarly to the particle diameter of the complex tungsten oxide particles described above.

(1-3) Heat Treatment Step

In the heat treatment step, it is possible to heat-treat the raw material and process the raw material into complex tungsten oxide particles. The heat treatment needs only to be able to heat-treat the raw material at a temperature of 500°C or higher, and the configuration of the heat source is not particularly limited. Therefore, the heat treatment step can be performed by a method of introducing the raw material into a flame using a carrier gas, a method of introducing the raw material into a tubular electric furnace, a method of introducing the raw material into a plasma, or the like. In any of the cases of using a flame, using an electric furnace, and using a plasma, the heat treatment temperature can be 500°C or higher. When the heat treatment is performed at 500°C or higher, the compound contained in the raw material is decomposed, and tungsten and the element M react to form a complex tungsten oxide.

When the complex tungsten oxide particles obtained through the heat treatment step contain appropriate W atom defects or heterogeneous phases, it is possible to obtain complex tungsten oxide particles having dark regions in terms of the Z-contrast of W atoms through the reduction treatment step. Therefore, conditions, such as the heat treatment temperature and the like, can be selected such that the complex tungsten oxide particles obtained through the heat treatment step contain appropriate W atom defects or heterogeneous phases, and such that complex tungsten oxide particles from which spots, in which the Z-contrast of W atom has decreased, would be confirmed would be generated through the reduction treatment step. Therefore, it is preferable to perform a preliminary test or the like and to select the feed rate of the raw material, the heat treatment temperature, and the like in the heat treatment step, such that dark regions in terms of the Z-contrast of W atom would be contained at a desired ratio through the reduction treatment step. It is preferable to select the conditions, such as the heat treatment temperature and the like, such that heterogeneous phases can be reduced or removed through the reduction treatment step.

The heat treatment temperature may be 500°C or higher because it is only needed that the reaction between the tungsten and the element M can proceed, yet is preferably 550°C or higher, and even more preferably 1,000°C or higher. The upper limit of the heat treatment temperature is not particularly limited, yet is preferably 4,000°C or lower from the viewpoint of saving energy consumption.

In the heat treatment step, a flame can be used as described above, and the raw material can be heat-treated using the flame. By using the flame in the heat treatment step and adjusting the temperature of the reaction field of the flame, it is possible to select the particle diameter of the complex tungsten oxide particles to be obtained.

When synthesizing complex tungsten oxide particles by spraying a liquid raw material into a carrier gas to form liquid droplets, and introducing the raw material into a flame, the raw material liquid droplets move in the flame due to the carrier gas, such as oxygen gas. Then, when the raw material liquid droplets are conveyed into the flame, the organic solvent containing the tungsten source and the element M source, which are the raw material, combusts, and the solvent is decomposed by the combustion reaction. The heat generated by the combustion reaction contributes to the decomposition reactions of the tungsten and the element M, which thus precipitate in the process of being cooled at the tail flame part of the flame field.

For example, as described above, examples of the element W source include hexacarbonyl tungsten and the like, and examples of the element M source, when the element M is cesium, include cesium acetate and the like. These salts decompose in the heat treatment step. Here, while W easily precipitates as $WO_6$, Cs hardly forms an oxide as a monomer, and some part of Cs passes through a filter without being able to precipitate as nano-sized powder, and is discharged out of the system.

In the above case, in the decomposition process of the solute part, tungsten and the element M react, to form a complex tungsten oxide.

When using a flame in the heat treatment step, the conditions for forming the flame, and the like, are not particularly limited. Yet, a flame can be formed by using a mixture gas containing, for example, oxygen and a hydrocarbon. By forming a flame with a mixture gas containing oxygen and a hydrocarbon, it is possible to form a flame having a stable temperature, and to form complex tungsten oxide particles with reduced variation in the particle diameter and the like.

The method for adjusting the size of the flame and the temperature of the flame is not particularly limited. Yet, it is preferable, for example, to adjust the flow rates of oxygen and a combustible gas, such as a hydrocarbon or the like, in the mixture gas to be supplied to the flame, while adjusting the flow rate ratio between both gases such that the combustible gas can be combusted. This is because it is possible to adjust the thermal power while securing an amount of oxygen necessary for the combustible gas to be combusted.

For example, when the flame is formed with a mixture gas containing oxygen and propane, it is preferable that the flow rate ratio by volume between propane and oxygen in the mixture gas is preferably 5 or greater and 8 or less of oxygen relative to 1 of propane, and the flow rate of propane is preferably 0.5 L/min or higher and 2 L/min or higher. This is because it is possible to sufficiently promote the combustion of propane, which is the combustible gas, by setting the flow rate of oxygen to 5 or higher when the flow rate of propane is 1. However, it is preferable to supply 8 or lower of oxygen relative to 1 of propane such that the supply of oxygen would not become excessive.

The heat treatment temperature of the reaction field of a flame or the like also affects the particle diameter of the complex tungsten oxide particles to be obtained.

This is estimated to be because the thermal energy in the reaction field, such as a flame or the like, is used for sublimation of the generated complex tungsten oxide particles, to cause the particles to burst by the sublimation, to result in particles having a minute particle size.

The complex tungsten oxide particles obtained by the heat treatment can be recovered by using, for example, a filter.

(1-4) Reduction Treatment Step

Particles obtained through the heat treatment step, specifically the complex tungsten oxide particles, may not exhibit infrared absorption characteristics. Therefore, the inventors of the present invention conducted studies and found it possible to bring the complex tungsten oxide particles to exhibit infrared absorption characteristics, by further performing a reduction treatment step of subjecting the complex tungsten oxide particles obtained through the heat treatment step to a reduction treatment.

Therefore, the method for producing complex tungsten oxide particles of the present embodiment may include a reduction treatment step of subjecting the particles obtained through the heat treatment step to a reduction treatment in an atmosphere containing a reducing gas. Specifically, for example, the method for producing complex tungsten oxide particles according to the present embodiment may include a reduction treatment step of, after the heat treatment step, subjecting the complex tungsten oxide particles to a reduction treatment at a temperature within a range higher than 400°C and lower than 700°C in an atmosphere containing a reducing gas.

Although the conditions for the reduction treatment are not particularly limited, it is preferable to select the conditions for the reduction treatment such that, when the complex tungsten oxide particles after the reduction treatment are analyzed by an X-ray diffraction pattern, there would be no change in the crystal structure between before and after the reduction treatment step, and metal tungsten and the like would not precipitate. It is also preferable to select the conditions for the reduction treatment such that the complex tungsten oxide particles after the reduction treatment step would have dark regions in terms of the Z-contrast of W atom at a desired ratio.

In the reduction treatment step, the complex tungsten oxide particles obtained in the heat treatment step can be reduction-treated by raising and lowering the temperature in a reducing atmosphere containing a reducing gas, that is, by performing heat treatment.

During the reduction treatment step, the complex tungsten oxide particles may be stirred or left to stand still, and the handling of the complex tungsten oxide particles in the reduction treatment step can be appropriately selected. Yet, it is preferable to select the handling conditions such that metal tungsten and the like would not precipitate.

The temperature for the reduction treatment (reduction treatment temperature) is preferably higher than 400°C, more preferably 450°C or higher, and even more preferably 500°C or higher.

The upper limit of the temperature of the reduction treatment is not particularly limited, yet is preferably, for example, lower than 700°C, more preferably 650°C or lower, and even more preferably lower than 650°C.

In the case where the raw material is a liquid, when the concentration of the raw material is reduced in the aerosol formation step, the particle size to be obtained is reduced. Since the particles with reduced diameters are more easily reducible, the temperature in the reduction treatment step can be reduced. In the reduction treatment step, the temperature can be raised from room temperature to the temperature of the reduction treatment, and then lowered to room temperature again.

The reducing condition can be determined based on the optical characteristics of the complex tungsten oxide particles to be obtained.

By raising the temperature of the reduction treatment above 400°C, it is possible to promote the reduction treatment of the complex tungsten oxide particles, and to cause the complex tungsten oxide particles to exhibit infrared absorption characteristics more reliably. When the temperature is lower than 700°C, it is possible to inhibit the complex tungsten oxide particles from being reduced to metal tungsten.

The reducing atmosphere is preferably an atmosphere of a mixture gas of an inert gas, such as argon and the like, and a reducing gas, such as $H_2$ gas (hydrogen gas) and the like. The reducing gas is preferably $H_2$ gas.

When using $H_2$ gas as the reducing gas, the content of Hz gas in the reducing atmosphere can be suitably selected. Yet, the content of $H_2$ gas expressed by volume ratio is preferably in the range of 0.1% or greater and 10% or less, and more preferably in the range of 2% or greater and 10% or less. When reduction is performed in an atmosphere containing only the reducing gas, the reduction reaction might excessively proceed to cause metal tungsten to precipitate. Thus, care must be taken.

The time taken for the reduction treatment step, as the total time from the temperature raising to the temperature lowering, is preferably 30 minutes or longer. The upper limit of the time taken for the reduction treatment step is not particularly limited, and it is preferable to select the upper limit by conducting a preliminary test or the like to prevent excessive reduction. Here, the total time from the temperature raising to the temperature lowering means the time from starting the temperature raising from room temperature, and after reaching the reduction treatment temperature, to lowering the temperature to cool to room temperature. It is preferable that the complex tungsten oxide particles are placed under the reducing atmosphere described above for as long as such a time.

By performing the reduction treatment step in this manner, it is possible to convert any unintended heterogeneous phase in the complex tungsten oxide particles obtained through the heat treatment step into the intended complex tungsten oxide phase.

(2) Apparatus Suitable for Use in Method for Producing Complex Tungsten Oxide Particles

(2-1) Composite Material Production apparatus

An example of the configuration of a composite material production apparatus suitable for use in the method for producing complex tungsten oxide particles according to the present embodiment will be described below.

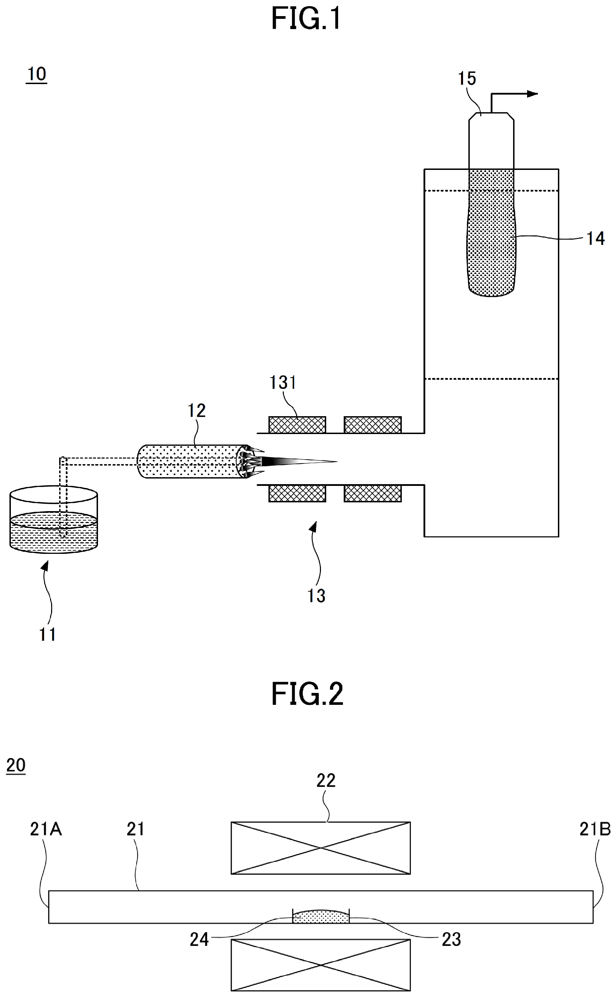

FIG. 1 is a diagram schematically showing a composite material production apparatus 10 according to the present embodiment.

The composite material production apparatus 10 includes a storage section 11 containing a solution as the raw material, a two-fluid nozzle 12 for forming liquid droplets of the raw material and forming a flame together, and a reaction tube 13 connected to a filter 14 for collecting complex tungsten oxide particles formed. As already described, examples of the solution as the raw material include a solution containing the element M source and the element W source.

An aerosol can be formed by supplying the raw material solution and a carrier gas to the two-fluid nozzle 12 (aerosol formation step). For example, with oxygen and a hydrocarbon supplied to the two-fluid nozzle 12 and a reaction field of a flame formed at the two-fluid nozzle 12 together, the formed aerosol can be supplied into the flame and heat-treated (heat treatment step). A cooling water pipe 131 is disposed around the reaction tube 13 to circulate cooling water. The complex tungsten oxide particles introduced into the reaction tube 13 are collected by the filter 14, such as a bag filter or the like.

Further, an ejector 15 may be provided farthest downstream in order to adjust the supply amount of the carrier gas.

Here, an example of the configuration of the composite material device for forming complex tungsten oxide particles by forming liquid droplets of the raw material and performing heat treatment using a flame is shown. However, the configuration is non-limiting, the raw material may be a powder or the like, and the heat source used for the heat treatment may be an electric furnace or the like.

(2-2) Reduction Treatment Apparatus

A reduction treatment apparatus can perform the reduction treatment step described above.

The reduction treatment apparatus needs only to be configured to be able to perform the reduction treatment step described above, and is not particularly limited. For example, the apparatus needs only to include a container for storing complex tungsten oxide particles that are particles obtained by the composite material production apparatus described above, a gas pipe for supplying a mixture gas for forming a reducing atmosphere in the container, and a heat source for heating the container.

The mixture gas for forming a reducing atmosphere may be introduced into the container, and the container may be vacuumed, to put the treatment-target complex tungsten oxide particles under an air stream of the mixture gas. In this case, a supply pipe for the mixture gas and a vacuuming pipe may be provided as gas pipes in order to be able to form the air stream.

A stirring blade for stirring the complex tungsten oxide particles in the container may also be used.

FIG. 2 is a diagram schematically showing one configuration example of the reduction treatment apparatus, and shows a cross-sectional view of a reduction treatment apparatus 20 along a surface passing through the center axis of a reaction tube 21.

The reduction treatment apparatus 20 is a horizontally-long tubular furnace, and can be used with a gas introduction pipe (not shown) attached to one port 21A of the reaction tube 21 and a vacuuming pipe (not shown) attached to the other port 21B of the tubular furnace. Then, by supplying the mixture gas for forming a reducing atmosphere from the one port 21A side, it is possible to form a reducing atmosphere in the interior of the reaction tube 21.

A heater 22 can be provided around the reaction tube 21, and the complex tungsten oxide particles can be set at a position, in the reaction tube 21 of the tubular furnace, that corresponds to the heater 22 while being placed in a ceramic container 23, such as a boat or the like.

By using the reduction treatment apparatus 20 to form a reducing atmosphere in the reaction tube 21 and perform heating to a desired temperature by the heater 22, it is possible to reduction-treat the complex tungsten oxide particles 24 placed in the container 23.

[Infrared-Absorbing Particle Dispersion Liquid]

Next, one configuration example of an infrared-absorbing particle dispersion liquid that can be used when manufacturing an infrared-absorbing fiber of the present embodiment will be described.

The infrared-absorbing particle dispersion liquid of the present embodiment can contain infrared-absorbing particles and a liquid medium. The above-described complex tungsten oxide particles can be used as the infrared-absorbing particles.

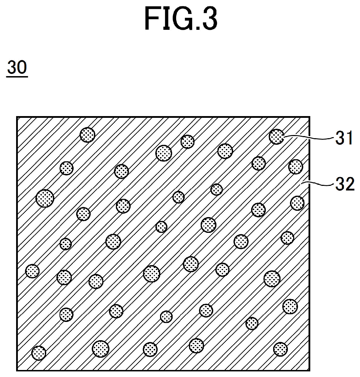

For example, one or more selected from water, organic solvents, oils and fats, liquid resins, and liquid plasticizers can be used as the liquid medium. That is, for example, as shown in FIG. 3, an infrared-absorbing particle dispersion liquid 30 of the present embodiment can contain infrared-absorbing particles 31 and a liquid medium 32. It is preferable that the infrared-absorbing particle dispersion liquid preferably has a configuration in which the infrared-absorbing particles are dispersed in the liquid medium.

Note that FIG. 3 is a schematic view, and the infrared-absorbing particle dispersion liquid of the present embodiment is not limited to this configuration. For example, although the infrared-absorbing particles 31 are shown by circles and expressed as spherical particles in FIG. 3, the shape of the infrared-absorbing particles 31 that are the complex tungsten oxide particles described above is not limited to this shape, and can be any shape. The infrared-absorbing particles 31 can have, for example, a coating on the surface. In addition to the infrared-absorbing particles 31 and the liquid medium 32, the infrared-absorbing particle dispersion liquid 30 can contain other additives as necessary.

As described above, one or more selected from water, organic solvents, oils and fats, liquid resins, and liquid plasticizers can be used as the liquid medium.

As the organic solvent, various types, such as alcohol-based, ketone-based, ester-based, hydrocarbon-based, glycol-based, and such other organic solvents can be used. More specifically, examples of the organic solvent include one or more selected from alcohol-based solvents, such as isopropyl alcohol, methanol, ethanol, 1-propanol, butanol, pentanol, benzyl alcohol, diacetone alcohol, 1-methoxy-2-propanol, and the like; ketone-based solvents, such as acetone, methyl ethyl ketone, methyl propyl ketone, methyl isobutyl ketone, cyclohexanone, isophorone, and the like; ester-based solvents, such as 3-methyl-methoxypropionate, n-butyl acetate, and the like; glycol derivatives, such as ethylene glycol monomethyl ether, ethylene glycol monoethyl ether, ethylene glycol isopropyl ether, propylene glycol monoethyl ether, propylene glycol methyl ether acetate, propylene glycol ethyl ether acetate, and the like; amides, such as formamide, N-methyl formamide, dimethylformamide, dimethyl acetamide, N-methyl-2-pyrrolidone, and the like; aromatic hydrocarbons, such as toluene, xylene, and the like; and halogenated hydrocarbons, such as ethylene chloride, chlorobenzene, and the like. Among these organic solvents, organic solvents having a low polarity are preferred, and especially isopropyl alcohol, ethanol, 1-methoxy-2-propanol, acetone, methyl ethyl ketone, methyl isobutyl ketone, toluene, propylene glycol monomethyl ether acetate, n-butyl acetate, and the like are more preferred. One, or a combination of two or more, of these organic solvents can be used.

As the oil and fat, for example, one or more selected from: drying oils, such as linseed oil, sunflower oil, tung oil, and the like; semi-drying oils, such as sesame oil, cottonseed oil, rapeseed oil, soybean oil, rice bran oil, and the like; non-drying oils, such as olive oil, coconut oil, palm oil, dehydrated castor oil, and the like; fatty acid monoesters prepared by direct ester reaction between fatty acids of vegetable oils and monoalcohols, ethers, and petroleum-based solvents, such as Isopar (registered trademark) E, Exxsol (registered trademark) Hexane, Heptane, E, D30, D40, D60, D80, D95, D110, and D130 (all available from Exxon Mobil Corporation) can be used.

As the liquid resin, for example, one or more selected from liquid acrylic resins, liquid epoxy resins, liquid polyester resins, liquid urethane resins, and the like can be used.

As the liquid plasticizer, for example, a liquid plasticizer for plastics, and the like, can be used.

The components contained in the infrared-absorbing particle dispersion liquid are not limited to the infrared-absorbing particles and the liquid medium described above. The infrared-absorbing particle dispersion liquid can further contain optionally added components as necessary.

For example, an acid or an alkali may be added to the infrared-absorbing particle dispersion liquid as necessary to adjust the pH of the dispersion liquid.

In order to further improve the dispersion stability of the infrared-absorbing particles and to avoid coarsening of the particle diameter in the dispersed state due to re-agglomeration in the infrared-absorbing particle dispersion liquid described above, various surfactants, coupling agents, or the like may be added to the infrared-absorbing particle dispersion liquid as a dispersant.

Although the dispersant, such as a surfactant, a coupling agent, and the like, can be selected in accordance with the application, it is preferable that the dispersant contains one or more selected from amino group, hydroxyl group, carboxyl group, and epoxy group, as a functional group. These functional groups have an effect of adsorbing to the surface of the infrared-absorbing particles to prevent agglomeration, and dispersing the infrared-absorbing particles uniformly also in an infrared-shielding film formed by using the infrared-absorbing particles. The dispersant is more preferably a polymeric dispersant containing one or more selected from the functional groups (the group of functional groups) described above in a molecule.

Examples of commercially available dispersants that can be suitably used include one or more selected from Solsperse (registered trademark) 9000, 12000, 17000, 20000, 21000, 24000, 26000, 27000, 28000, 32000, 35100, 54000, and 250 (available from Lubrizol Japan Ltd.), EFKA (registered trademark) 4008, 4009, 4010, 4015, 4046, 4047, 4060, 4080, 7462, 4020, 4050, 4055, 4400, 4401, 4402, 4403, 4300, 4320, 4330, 4340, 6220, 6225, 6700, 6780, 6782, and 8503 (available from Efka Additives B.V.), Ajisper (registered trademark) PA111, PB821, PB822, PN411, and Famex L-12 (available from Ajinomoto Fine Techno Co., Inc.), Disper BYK (registered trademark) 101, 102, 106, 108, 111, 116, 130, 140, 142, 145, 161, 162, 163, 164, 166, 167, 168, 170, 171, 174, 180, 182, 192, 193, 2000, 2001, 2020, 2025, 2050, 2070, 2155, 2164, 220S, 300, 306, 320, 322, 325, 330, 340, 350, 377, 378, 380N, 410, 425, and 430 (available from Byk-Chemie Japan), Disparlon (registered trademark) 1751N, 1831, 1850, 1860, 1934, DA-400N, DA-703-50, DA-725, DA-705, DA-7301, DN-900, NS-5210, and NVI-8514L (available from Kusumoto Chemicals, Ltd.), ARUFON (registered trademark) UC-3000, UF-5022, UG-4010, UG-4035, and UG-4070 (available from TOAGOSEI CO., LTD.), and the like.

The method for dispersing the infrared-absorbing particles into the liquid medium is not particularly limited as long as the method can disperse the infrared-absorbing particles into the liquid medium. In this case, it is preferable that the infrared-absorbing particles can be dispersed such that the average particle diameter of the infrared-absorbing particles becomes 800 nm or less, and more preferably 1 nm or greater and 800 nm or less.

Examples of the method for dispersing the infrared-absorbing particles into the liquid medium include a method for dispersing the infrared-absorbing particles using a device, such as a bead mill, a ball mill, a sand mill, a paint shaker, an ultrasonic homogenizer, and the like. Among them, it is preferable to grind and disperse the infrared-absorbing particles by a medium stirring mill, such as a bead mill, a ball mill, a sand mill, a paint shaker, and the like using a medium (beads, balls, Ottawa sand) from the viewpoint of shortening the time required to obtain the desired average particle diameter. Through the grinding-dispersing treatment using the medium stirring mill, the infrared-absorbing particles are dispersed into the liquid medium, and at the same time, become atomized due to mutual collision, collision of the medium with the infrared-absorbing particles, and the like. Thus, the infrared-absorbing particles can be dispersed while being further atomized. That is, the infrared-absorbing particles can be ground and dispersed.

As described above, the average particle diameter of the infrared-absorbing particles is preferably 1 nm or greater and 800 nm or less. This is because particles having a small average particle diameter can reduce scattering of light, and can reduce generation of an unintended gloss in the visible region and an unintended hue due to light scattering having a wavelength-dependent intensity (Rayleigh scattering).

In addition, if coarse particles are present in a step of kneading the complex tungsten oxide particles of the present embodiment into fibers, yarns might break during spinning. From this viewpoint as well, it is preferable to reduce the particle diameter of the complex tungsten oxide particles.

Accordingly, the average particle diameter of the infrared-absorbing particles is preferably 800 nm or less, more preferably 200 nm or less, even more preferably 100 nm or less, and particularly preferably 30 nm or less. The lower limit value of the average particle diameter of the infrared-absorbing particles is not particularly limited, yet is preferably, for example, 1 nm or greater, more preferably 5 nm or greater, and even more preferably 10 nm or greater.

For the above reasons, the average particle diameter of the infrared-absorbing particles is preferably 1 nm or greater and 800 nm or less, more preferably 5 nm or greater and 200 nm or less, even more preferably 10 nm or greater and 200 nm or less, yet more preferably 10 nm or greater and 100 nm or less, and particularly preferably 10 nm or greater and 30 nm or less.

The dispersed state of the infrared-absorbing particles in an infrared-absorbing fiber obtained by using the infrared-absorbing particle dispersion liquid of the present embodiment would not include agglomeration greater than the average particle diameter of the infrared-absorbing particles in the dispersion liquid as long as a publicly-known method for addition to fibers is performed.

The content of the infrared-absorbing particles in the infrared-absorbing particle dispersion liquid of the present embodiment is not particularly limited, yet is preferably, for example, 0.01% by mass or greater and 80% by mass or less. This is because when the content of the infrared-absorbing particles is 0.01% by mass or greater, a sufficient solar radiation transmittance can be exhibited, that is, the solar radiation transmittance can be sufficiently restricted. In addition, when the content of the infrared-absorbing particles is 80% by mass or less, the infrared-absorbing particles can be dispersed uniformly in the dispersion medium.

Since the infrared-absorbing particle dispersion liquid of the present embodiment contains the above-described complex tungsten oxide particles, it is possible to obtain an infrared-absorbing particle dispersion liquid having excellent visible light transmission performance and excellent infrared-shielding performance. Furthermore, the infrared-absorbing particle dispersion liquid of the present embodiment has an excellent infrared-shielding effect that can achieve the bottom transmittance of 5% or lower in the infrared region even when the peak transmittance in the wavelength region of 500 nm or greater and 600 nm or less is 75% or higher. Furthermore, the infrared-absorbing particle dispersion liquid of the present embodiment can achieve a transmittance of 50% or higher at a wavelength of 700 nm and a transmittance of 30% or higher at a wavelength of 800 nm.

[Infrared-Absorbing Fiber]

An infrared-absorbing fiber according to the present invention will be described.

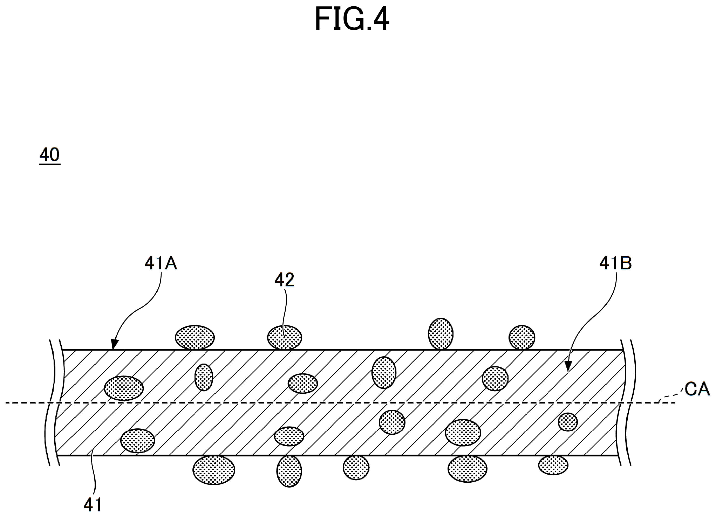

FIG. 4 shows a schematic view of the infrared-absorbing fiber of the present embodiment. FIG. 4 schematically shows a cross-sectional view of a fiber 41 contained in an infrared-absorbing fiber 40 taken along a plane passing through the center axis CA. As shown in FIG. 4, the infrared-absorbing fiber 40 of the present embodiment may contain the fiber 41 and complex tungsten oxide particles 42.

Although the location of the complex tungsten oxide particles 42 is not particularly limited, the complex tungsten oxide particles 42 may be located, for example, at one or more locations selected from a surface 41A and an interior 41B of the fiber 41. FIG. 4 is a schematic view, and shows an example in which the complex tungsten oxide particles 42 are located both on the surface 41A and in the interior 41B of the fiber 41. However, this is non-limiting. The complex tungsten oxide particles 42 may be located only either on the surface 41A or in the interior 41B of the fiber 41. Although the complex tungsten oxide particles 42 are shown as spherical particles in FIG. 4, the shape of the complex tungsten oxide particles 42 is not limited to this configuration and may be any shape.

Hereinafter, the components contained in the infrared-absorbing fiber of the present embodiment will be described.

(1) Components Contained in Infrared-Absorbing Fiber

(1-1) Fiber

(1-1-1) Type of Fiber

The fiber contained in the infrared-absorbing fiber of the present embodiment can be selected in various manners in accordance with the application and is not particularly limited. As the fiber, for example, one or more selected from: a fiber group consisting of synthetic fibers, semi-synthetic fibers, natural fibers, regenerated fibers, and inorganic fibers; and blended yarns of two or more types of fibers selected from the above-described fiber group obtained by blended spinning, yarn doubling, and filament yarn blending can be used. That is, a fiber selected from the fiber group can be used, or a fiber selected from the blended yarns can be used.

Particularly, it is preferable that the fiber contains a synthetic fiber and is more preferably composed of a synthetic fiber, considering facilitating introduction of the infrared-absorbing particles to the interior and the like of the fiber, and as well as heat retention durability.

Each fiber will be described below.

(Synthetic Fiber)

The synthetic fiber is not particularly limited. For example, one or more selected from polyurethane fibers, polyamide fibers, acrylic fibers, polyester fibers, polyolefin fibers, polyvinyl alcohol fibers, polyvinylidene chloride fibers, polyvinyl chloride fibers, polyether ester fibers, and the like can be used.

Examples of the polyamide fibers include nylon, nylon 6, nylon 66, nylon 11, nylon 610, nylon 612, aromatic nylon, aramid, and the like.

Examples of the acrylic fiber include polyacrylonitrile, acrylonitrile-vinyl chloride copolymers, modacrylic, and the like.

Examples of the polyester fiber include polyethylene terephthalate, polybutylene terephthalate, polytrimethylene terephthalate, polyethylene naphthalate, and the like.

Examples of the polyolefin fiber include polyethylene, polypropylene, polystyrene, and the like.

Examples of the polyvinyl alcohol fiber include vinylon and the like.

Examples of the polyvinylidene chloride fiber include vinylidene and the like.

Examples of the polyvinyl chloride fiber include polyvinyl chloride and the like.

Examples of the polyether ester fiber include Lexce, Success, and the like.

(Semi-Synthetic Fiber)

As the semi-synthetic fiber, for example, one or more selected from cellulosic fiber, protein fiber, chlorinated rubber, hydrochlorinated rubber, and the like can be used.

Examples of the cellulosic fiber include acetate, triacetate, oxidized acetate, and the like.

Examples of the protein fiber include promix and the like.

(Natural fiber)

As the natural fiber, for example, one or more selected from vegetable fiber, animal fiber, mineral fiber, and the like can be used.

Examples of the vegetable fiber include cotton, kapok, flax, hemp, jute, Manila hemp, Sisal hemp, New Zealand hemp, Apocynum, palm, rush, wheat straw, and the like.

Examples of the animal fiber include sheep hair, goat hair, Mohair, Cashmere, Alpaca, Angora, Camel hair, Vicuna, wool, silk, down, feather, and the like.

Examples of the mineral fiber include asbestos and the like.

(Regenerated Fiber)

As the regenerated fiber, one or more selected from cellulosic fiber, protein fiber, alginate fibers, rubber fibers, chitin fiber, mannan fiber, and the like can be used.

Examples of the cellulosic fiber include rayon, Viscose rayon, cupra, polynosic, cuprammonium rayon, and the like.

Examples of the protein fiber include casein fiber, groundnut protein fiber, corn protein fiber, soybean protein fiber, recycled silk yarn, and the like.

(Inorganic Fiber)

As the inorganic fiber, for example, one or more selected from metal fiber, carbon fiber, silicate fiber, and the like can be used.

Examples of the metal fiber include metal fiber, gold yarn, silver yarn, heat-resistant alloy fiber, and the like.

Examples of the silicate fiber include glass fiber, slag wool, rock fiber, and the like.

(1-1-2) Shape of Fiber

The cross-sectional shape of the fiber is not particularly limited. Examples of the cross-sectional shape include one or more selected from a circular shape, a triangular shape, a hollow shape, a flat shape, a Y shape, a star-shape, a core-sheath shape, and the like.

The form in which the complex tungsten oxide particles are contained and located in the fiber is not particularly limited. For example, when the cross-sectional shape of the fiber is a core-sheath type, the complex tungsten oxide particles may be contained in the core part of the fiber, or may be contained in the sheath part of the fiber. The shape of the fiber is not particularly limited, and may be a filament (continuous fiber) or a staple (short fiber).

(1-2) Complex Tungsten Oxide Particles

Since the complex tungsten oxide particles have already been described, a description thereof will be omitted.

The content of the complex tungsten oxide particles in the infrared-absorbing fiber of the present embodiment is not particularly limited, and may be selected in accordance with characteristics required of the infrared-absorbing fiber. Since the infrared absorbing ability per unit weight of the complex tungsten oxide particles is very high, the complex tungsten oxide particles can exhibit the effect only in a use amount that is approximately 1/4 to 1/10 that of ITO or ATO.

The infrared-absorbing fiber of the present embodiment may contain the complex tungsten oxide particles at a ratio of 0.001% by mass or greater and 80% by mass or less relative to the solid content of the fiber. Further, considering the weight of the fiber after addition of the complex tungsten oxide particles and the raw material cost, it is more preferable that the infrared-absorbing fiber of the present embodiment contains the complex tungsten oxide particles at a ratio of, for example, 0.005% by mass or greater and 50% by mass or less.

When the infrared-absorbing fiber contains the complex tungsten oxide particles at a ratio of 0.001% by mass or greater relative to the solid content of the fiber, a sufficient infrared-absorbing effect can be obtained even when a fabric containing the complex tungsten oxide particles is thin. Further, when the infrared-absorbing fiber contains the complex tungsten oxide particles at a ratio of 80% by mass or less relative to the solid content of the fiber, a decrease in the spinnability due to clogging of the filter, yarn breakage, and the like can be more reliably avoided when spinning the infrared-absorbing fiber. Further, when the content of the complex tungsten oxide particles is 80% by mass or less, deterioration of the physical properties of the fiber can be more reliably avoided.

(1-3) Additives and Far-Infrared Radiation Substance

The infrared-absorbing fiber according to the present embodiment may be composed of only the fiber and the complex tungsten oxide particles, yet may further contain optional components, such as a far-infrared radiation substance and additives described below in accordance with the purpose.

(Additives)

The infrared-absorbing fiber according to the present embodiment may contain an antioxidant, a flame retardant, a deodorant, an insect repellent, an antibacterial agent, an ultraviolet absorber, and the like in accordance with the purpose, within a range in which the performance of the fiber is not impaired.

(Far-Infrared Radiation Substance)

The far-infrared radiation substance is a material capable of radiating far-infrared rays, and is preferably in the form of particles. That is, far-infrared radiation substance particles can be suitably used as the far-infrared radiation substance.

The far-infrared radiation substance can be located at one or more locations selected from the surface and the interior of the fiber.

Examples of the far-infrared radiation substance include one or more selected from: metal oxides, such as $ZrO_2$, $SiO_2$, $TiO_2$, $Al_2O_3$, $MnO_2$, $MgO$, $Fe_2O_3$, $CuO$, and the like; carbides, such as $ZrC$, $SiC$, $TiC$, and the like; nitrides, such as $ZrN$, $Si_3N_4$, $AlN$, and the like; and the like.

Examples of the complex tungsten oxide particles include particles containing a cesium tungsten oxide. The cesium tungsten oxide has a property of absorbing solar energy with a wavelength of 300 nm or greater and 3,000 nm or less, and in particular, selectively absorbs an infrared region around a wavelength of 900 nm or greater and 2,500 nm or less, and converts it into heat or reradiates it.

On the other hand, particles of the far-infrared radiation substance have an ability to receive energy absorbed by the cesium tungsten oxide, which is the infrared-absorbing material, and convert the energy into heat energy with mid- and far-infrared wavelengths and radiate it. For example, $ZrO_2$ particles convert this energy into heat energy with a wavelength of 2,000 nm or greater and 20,000 nm or less and radiate it. Therefore, when the far-infrared radiation substance having the ability to radiate the far-infrared rays and the complex tungsten oxide particles coexist in the interior of the fiber or on the surface of the fiber, the solar energy absorbed by the complex tungsten oxide particles is efficiently consumed in the interior of the fiber or on the surface of the fiber, resulting in more effective heat retention.

The content of the far-infrared radiation substance in the infrared-absorbing fiber is not particularly limited and can be selected in accordance with the performance required of the infrared-absorbing fiber.

It is preferable that the infrared-absorbing fiber of the present embodiment contains the far-infrared radiation substance at a ratio of, for example, 0.001% by mass or greater and 80% by mass or less relative to the solid content of the fiber.

This is because when the content of the far-infrared radiation substance is 0.001% by mass or greater, a sufficient thermal energy radiation effect can be obtained even if the fabric containing the infrared-absorbing fiber is thin. In addition, when the content of the far-infrared radiation substance is 80% by mass or less, it is possible to more reliably avoid a decrease in the spinnability of the infrared-absorbing fiber due to clogging of the filter, yarn breakage, and the like during spinning.

(2) Method for Manufacturing Infrared-Absorbing Fiber

A method for manufacturing an infrared-absorbing fiber of the present embodiment will be described. According to the method for manufacturing an infrared-absorbing fiber of the present embodiment, the above-described infrared-absorbing fiber can be manufactured. Thus, description of any particulars that have already been described will be omitted.

The method for manufacturing an infrared-absorbing fiber of the present embodiment may include an infrared-absorbing fiber manufacturing step of preparing the infrared-absorbing fiber containing a fiber and complex tungsten oxide particles.

Since the complex tungsten oxide particles and the fiber have already been described, description thereof will be omitted here.

Specifically, in the infrared-absorbing fiber manufacturing step, for example, the complex tungsten oxide particles can be located at one or more locations selected from the surface and the interior of the fiber.

The method for locating the complex tungsten oxide particles at one or more locations selected from the surface of the fiber and the interior of the fiber is not particularly limited. For example, any of the following methods (a) to (d) can be used.

(a) A method of spinning a raw material polymer of a synthetic fiber while directly blending the complex tungsten oxide particles into the raw material polymer.

(b) A method of previously producing a masterbatch in which the complex tungsten oxide particles are contained at a high concentration in a part of raw material polymers, and performing spinning using the masterbatch after diluting the masterbatch to a predetermined concentration.

(c) A method of previously preparing a dispersion solution in which the complex tungsten oxide particles are dispersed in a raw material monomer or oligomer solution, and synthesizing a target raw material polymer using the dispersion solution while simultaneously spinning the raw material polymer in which the complex tungsten oxide particles have already been dispersed.

(d) A method of attaching the complex tungsten oxide particles, using a binder or the like, to the surface of a fiber obtained by performing spinning in advance.

Here, the methods (a) to (d) will be further described with specific examples.

Method (a):

A case where polyester fiber is used as the fiber will be described as an example.

First, the complex tungsten oxide particle dispersion liquid is added to a polyethylene terephthalate resin pellet, which is a thermoplastic resin, and uniformly mixed with the resin pellet using a blender, and then the solvent is removed. The mixture from which the solvent is removed is melt-kneaded using a twin-screw extruder to obtain a masterbatch containing the complex tungsten oxide particles. The obtained masterbatch is melt-mixed at around the melting temperature of the resin and spun by, for example, any of various publicly-known methods, to produce the infrared-absorbing fiber.

The method for producing the masterbatch is not particularly limited. For example, a masterbatch in which the complex tungsten oxide particles are dispersed in the thermoplastic resin can be prepared by melt-mixing the complex tungsten oxide particle dispersion liquid and a powder or a pellet of the thermoplastic resin, and if necessary, other additives, by using a kneader while removing the solvent.

The kneader is not particularly limited, yet one or more selected from, for example, a mixing machine, such as a ribbon blender, a tumbler, a Nauta mixer, a Henschel mixer, a super mixer, a planetary mixer, and the like, a Banbury mixer, a kneader, a roll, a kneader-extruder, a single-screw extruder, a twin-screw extruder, and the like, can be used.

The method for preparing the mixture in which the complex tungsten oxide particles are dispersed in the resin is not limited to the above-described form.

For example, after the complex tungsten oxide particle dispersion liquid is prepared, the dispersion medium of the dispersion liquid is removed by a publicly-known method. Then, the powder resulting from removing the dispersion medium and a powder or a pellet of the thermoplastic resin, and, if necessary, other additives, are uniformly melt-mixed. Also in this way, the mixture in which the complex tungsten oxide particles are dispersed in the thermoplastic resin can be produced. Moreover, for producing the mixture in which the complex tungsten oxide particles are dispersed in the thermoplastic resin, a method of directly adding the complex tungsten oxide particles to the thermoplastic resin and melt-mixing them may also be used.

It is possible to obtain the masterbatch containing the infrared-absorbing particles, by kneading the mixture of the complex tungsten oxide particles and the thermoplastic resin obtained by the above-described method, by a vented single-screw or twin-screw extruder, and processing the mixture into a pellet form.

Target amounts of this masterbatch and of a complex tungsten oxide particle-free polyethylene terephthalate masterbatch are melt-mixed at around the melting temperature of the resin, and spun according to a publicly-known method.

Method (b):

A masterbatch containing the complex tungsten oxide particles is prepared by utilizing a method that is the same as or similar to the method of (a), or another method. This masterbatch and a complex tungsten oxide particle-free polyethylene terephthalate masterbatch are melt-mixed at around the melting temperature of the resin, such that their mix proportion will be the desired one, and spun according to a publicly-known method. In this way, the infrared-absorbing fiber can be manufactured.

Method (c):

For example, a case where urethane fiber is used as the fiber will be described as an example.
A polymer diol containing the complex tungsten oxide particles and an organic diisocyanate are reacted in a twin-screw extruder to synthesize an isocyanate group-terminated prepolymer, which is then reacted with a chain extender, to prepare a polyurethane solution (raw material polymer). Infrared-absorbing particles can be manufactured by spinning the polyurethane solution according to any of various publicly-known methods.

Method (d):

For example, a case where the complex tungsten oxide particles are attached to the surface of a natural fiber will be described as an example.
First, a treatment liquid is prepared by mixing the complex tungsten oxide particles, one or more binder resins selected from acrylic, epoxy, urethane, and polyester, and a solvent, such as water or the like.
Next, either the natural fiber is immersed in the prepared treatment liquid, or the natural fiber is impregnated with the prepared treatment liquid by padding, printing, spraying, or the like, and then the resulting product is dried. In this way, the complex tungsten oxide particles can be attached to the natural fiber. The method (d) can be applied not only to the natural fiber described above, but also to synthetic fiber, semi-synthetic fiber, regenerated fiber, and inorganic fiber, or any processed form of these fibers, such as blended-spun, yarn-doubled, or filament-yarn-blended fibers.
The method for preparing the complex tungsten oxide particle dispersion liquid that can be used when performing the above-described methods (a) to (d) is not particularly limited. For example, the infrared-absorbing particle dispersion liquid can be prepared by the method already described.
The dispersion medium of the complex tungsten oxide particle dispersion liquid is not particularly limited, and can be selected in accordance with the fiber to be mixed. For example, various common organic solvents, such as alcohols, ethers, esters, ketones, aromatic compounds, and the like, water, and the like can be suitably used.
When attaching or mixing the complex tungsten oxide particles to or with the fiber or the raw material polymer or the like of the fiber, the complex tungsten oxide particle dispersion liquid can be directly mixed with the fiber or the raw material polymer of the fiber. If necessary, an acid or alkali may be added to the complex tungsten oxide particle dispersion liquid to adjust the pH, or various surfactants, coupling agents, or the like may be added to further improve the dispersion stability of the complex tungsten oxide particles.
As described above, the infrared-absorbing fiber according to the present embodiment contains the complex tungsten oxide particles as the infrared-absorbing component. Since the infrared-absorbing fiber according to the present embodiment efficiently absorbs near-infrared rays from sunlight or the like and converts them into heat even when the content of the complex tungsten oxide particles in the infrared-absorbing fiber is small, it is possible to provide a fiber having excellent heat retention even with a small content of the complex tungsten oxide particles. Furthermore, since the content of the complex tungsten oxide particles in the infrared-absorbing fiber according to the present embodiment can be reduced, it is possible to avoid spoiling the design quality of a fiber product and to avoid impairing the basic physical properties of the fiber, such as strength, elongation, and the like. As a result, the fiber according to the present embodiment can be used for various applications, such as fiber products including cold protection clothing, sportswear, stockings, curtains, and the like that need to have a heat retention property, other industrial fiber products, and the like. Furthermore, when an infrared-shielding fiber structure according to the present embodiment is used for clothing, it is possible to reduce the amount of infrared rays, contained in the natural light, that would reach the human skin, and to thereby reduce damage to the skin. When a fiber product according to the present embodiment is used as a curtain and deployed over a window of a building or the like, the curtain absorbs infrared rays contained in the sunlight to thereby serve as a curtain having an infrared-shielding function, which shields solar radiation incident to the window and can also inhibit a rise of the room temperature in the summertime.

Furthermore, since the infrared-absorbing fiber according to the present embodiment exhibits excellent infrared-absorbing performance even when the content of the complex tungsten oxide particles, which are infrared-absorbing particles, in the infrared-absorbing fiber is small, the infrared-absorbing fiber can prevent transmission and reflection of infrared rays and can thereby prevent the so-called secret filming, while also making it possible to prevent the texture of the fiber from being spoiled. Therefore, the infrared-absorbing fiber can be used in various applications as an infrared-absorbing fiber for preventing the so-called secret filming.

[Fiber Product]

A fiber product of the present embodiment is formed by processing the above-described infrared-absorbing fiber, and can contain the above-described infrared-absorbing fiber. The fiber product of the present embodiment may even be composed of the above-described infrared-absorbing fiber.

(1) Secret Filming Preventing Function of Fiber Product of Present Embodiment Against CCD Camera

The fiber product of the present embodiment, which is a fabric using the infrared-absorbing fiber or a clothing item using the fabric, can exert the prevention of secret filming by infrared rays (imaging through clothing by a CCD camera), as defined by the Japan Spinners' Foundation test (Boken Standard "BQE A 033"), as long as the content of the complex tungsten oxide particles, for example, cesium tungsten complex oxide, in the fiber product per unit area is $0.08 \ g/m^2$ or greater.

From the viewpoint of providing the function for preventing secret filming by a CCD camera, the content of the complex tungsten oxide particles, per unit area, in the fiber product (infrared-shielding fiber structure) of the present embodiment using the infrared-absorbing fiber can be $0.08 \ g/m^2$ or greater as described above, and is preferably $0.15 \ g/m^2$ or greater and even more preferably $0.20 \ g/m^2$ or greater. The upper limit value of the content of the complex tungsten oxide particles in the fiber product of the present embodiment per unit area is not particularly limited, yet can be, for example, $4.5 \ g/m^2$ or less.

Accordingly, the content of the complex tungsten oxide particles in the fiber product of the present embodiment per unit area can be $0.08 \ g/m^2$ or greater and $4.5 \ g/m^2$ or less, preferably $0.15 \ g/m^2$ or greater and $4.5 \ g/m^2$ or less, and even more preferably $0.20 \ g/m^2$ or greater and $4.5 \ g/m^2$ or less.

When the content of the complex tungsten oxide particles in the fiber product of the present embodiment per unit area is $0.08 \ g/m^2$ or greater, the average reflectance of the infrared region (a wavelength range from 800 nm to 1,300 nm) on the fiber product can be 65% or lower. When the average reflectance on the fiber product of the present embodiment is 65% or lower, it is possible to prevent secret filming by infrared rays (imaging through clothing by a CCD camera) through a clothing item using the fiber product of the present embodiment in the form of a woven fabric or a knitted fabric. The average reflectance on the fiber product of the present embodiment is more preferably 60% or lower, and even more preferably 55% or lower.

The average reflectance on the fiber product of the present embodiment can be selected depending on the content of the complex tungsten oxide particles per unit area. For example, when the content of the complex tungsten oxide particles in the fiber product of the present embodiment per unit area is $0.15 \ g/m^2$ or greater, the average reflectance on the fiber product can be 60% or lower. Further, when the content of the complex tungsten oxide particles in the fiber product of the present embodiment per unit area is $0.20 \ g/m^2$ or greater, the average reflectance on the fiber product can be 55% or lower.

When the content of the complex tungsten oxide particles in the fiber product of the present embodiment per unit area exceeds $4.5 \ g/m^2$, the average reflectance becomes lower than 0.07%. Yet, even if the average reflectance is so far lower, the effect of preventing secret filming by infrared rays is no longer improved. Therefore, the content of the complex tungsten oxide particles in the fiber product of the present embodiment per unit area may be $4.5 \ g/m^2$ or less as described above, or may even be $3.5 \ g/m^2$ or less. When the content of the complex tungsten oxide particles per unit area is $3.5 \ g/m^2$ or less, the average reflectance is 0.2% or less, and the effect of preventing secret filming by infrared rays is sufficiently exhibited. However, when the complex tungsten oxide particles are contained excessively in the fiber product per unit area, this might make it difficult for a hue to develop the intended color, depending on the hue in which the fiber product is dyed.

It should be noted that the average reflectance of the infrared region (a wavelength range from 800 nm to 1,300 nm) on a fiber product containing no complex tungsten oxide particles is 77%, as confirmed in the following reference example. This average reflectance disadvantageously allows secret filming by infrared rays (imaging through clothing by a CCD camera).

The above-mentioned average reflectance is an average value of the reflectance values on the fiber product measured with a spectrophotometer in the wavelength range of 800 nm or greater and 1,300 nm or less at 5 nm intervals.

This focus on the reflectance on the fiber product will be explained, with regard to the solution for preventing secret filming by infrared rays (imaging through clothing by a CCD camera).

Why an object can be recognized when the object is seen by an eye is because the light with which the object is irradiated is reflected to enable the eye to form an image of the object, and the same applies to an image captured by a camera.

In the fiber product, the complex tungsten oxide particles that absorb infrared rays are contained at one or more locations selected from the surface and interior of the fiber. When the fiber product is irradiated with light, the complex tungsten oxide particles absorb infrared rays, to reduce the reflectance of a region exceeding a wavelength of 780 nm in the infrared region. That is, the reflectance of infrared rays, among the light components with which the fiber product of the present embodiment is irradiated, decreases. As a result, even if an image of the fiber product of the present embodiment is captured by a CCD camera, the image becomes blurred because the reflectance of the region exceeding the wavelength of 780 nm is reduced.

It is known that the wavelength region of commonly used CCD cameras is from 400 nm to 1,200 nm. Since the fiber product of the present embodiment allows a reduced reflectance for the region exceeding the wavelength of 780 nm in the infrared region among the light components with which the fiber product is irradiated, it can prevent secret filming by infrared rays (imaging through clothing by a CCD camera). Although a CCD camera has been described as an example of the image capture device used for secret filming by infrared rays, the fiber product of the present embodiment can prevent secret filming by any image capture devices that are capable of capturing images of infrared rays, regardless of the camera types.

On the other hand, absorption of light in the visible region by the complex tungsten oxide particles contained in the fiber product of the present embodiment is very low compared to absorption of light in an infrared range exceeding the wavelength of 780 nm. That is, since absorption of light in the visible region by the complex tungsten oxide particles contained in the fiber product of the present embodiment is low, the fiber product can be freely colored by dyeing and the like.

[Examples]

Specific Examples will be described below, but the present invention is not limited to these Examples.

(1) Evaluation Method

(1-1) Powder X-Ray Diffraction Pattern

Powder X-ray diffraction patterns (XRD patterns) of complex tungsten oxide particles were measured using a powder X-ray diffractometer (BRUKER D2 PHASER). The powder X-ray diffraction patterns were measured using Copper K-alpha rays (Cu K$\alpha$ rays) as a radiation source at a tube voltage of 45 kV and a tube current of 40 mA.

(1-2) Observation of STEM Images and HAADF Images

Complex tungsten oxide particles obtained were observed using a transmission electron microscope. High-angle angular dark-field (HAADF) images of the particles were also observed using a STEM obtained from JEOL Ltd. (model: JEM-ARM200F). The atomic number (Z) contrast in the HAADF image is proportional to the second power of the atomic number of the atoms contained in the particles and to the number of atoms. The more multilayered heavy atoms are stacked, the brighter contrast the atoms exhibit. Therefore, it is considered that the brightest contrast and the second brightest contrast are exhibited by W, the third brightest contrast is exhibited by Cs, and O cannot be confirmed.

The sample was placed on a Cu mesh with a support film by the dispersion method, and observed.

During the observation, a high-angle annular dark-field image (STEM-HAADF) was captured at an acceleration voltage of 200 kV. This observation image was captured by detecting only transmitted electrons scattered at large angles, among electrons transmitted through the sample. As described above, the contrasts due to the compositional difference can be obtained from the image. Since the size of the scattering angle is proportional to the second power of the atomic number (Z), the element with a greater atomic number has a brighter contrast. In the case of complex tungsten oxide particles prepared in the Examples and Comparative Examples, it is possible to distinguish between Cs and W based on the difference in contrast.

In the evaluation, the difference in the contrast intensity between tungsten columns (W columns), which are spots (points) in which tungsten is located in the STEM-HAADF image, was used to distinguish between a W-defective site and a W-non-defective site. If W is defective, the maximum value of the Z-contrast would decrease at the spot.

Contrast evaluation and observation of the observed STEM-HAADF image was performed using Digital Micrograph (Version 3.43.3213.0) obtained from Gatan, Inc. The observation data was read into this software, and the contrasts of the pertinent spots were extracted by a line profile function.

For the STEM-HAADF image, particles equal to greater than 50 nm in size were selected from among dispersed complex tungsten oxide particles, in order to inhibit deterioration by electron beams. The particle size adopted to select the particles to be observed was the diameter of the minimum bounding circle containing a particle therein. In order to clearly discern the Z-contrast of W atoms, the size of the observation field of view can be set to be 20 nm square or greater and 50 nm square or less for observation.

FIG. 5 shows the crystal structure of a hexagonal crystal $Cs_{0.33}WO_3$, which is a Cs-W-O compound having a hexagonal crystal structure, with the beam incident along the [001] direction, that is, in the (001) plane. W/W rows 501, in which only W atoms 51 are arranged, and W/Cs rows 502, in which W atoms 51 and Cs atoms, which are the element M 53, are arranged alternately, are arrayed. In the drawing, the region S, which is sandwiched by double-headed arrows indicating the a-axis length and the b-axis length, is a unit cell. W columns and Cs columns exist in the c-axis direction perpendicular to the surface of the drawing sheet, and there are three W columns and one Cs column per region S.

When calculating the number ratio of dark regions in terms of the Z-contrast of tungsten atoms in the STEM-HAADF image, the number of W columns in the observation field of view was counted with reference to the crystal structure shown in FIG. 5.

Next, the maximum value of the Z-contrast of each W column spot in the observation field of view was calculated using the software described above, and the average value of the maximum values was obtained. The number, in the observation field of view, of dark regions, in each of which the maximum value of the contrast of the corresponding W column spot was equal to or less than 95% of the above average value, was counted.

Then, the ratio of the number of dark regions in the observation field of view to the number of W columns in the observation field of view was calculated.

(1-3) Transmitted Light Profile

As an optical characteristic of the infrared-absorbing particle dispersion liquid, a transmitted light profile was measured using a spectrophotometer (U-4100, obtained from Hitachi, Ltd.) at intervals of 5 nm in a wavelength range of 200 nm or greater and 2,600 nm or less.

(1-4) Composition Analysis

The ratio of each component contained in the complex tungsten oxide particles was evaluated by the following method.

The mass ratio of Cs was determined as the average of three measurements per sample obtained by polarized Zeeman atomic absorption spectroscopy (AAS, Model: ZA3300, obtained from Hitachi High-Tech Corporation).

The mass ratio of W was determined as the average of three measurements per sample obtained by inductively-coupled plasma optical emission spectroscopy (ICP-OES, Model: ICPE-9800, obtained from Shimadzu Corporation).

The mass ratio of O was determined as the average of three measurements per sample obtained by an infrared absorption spectroscopy (IRS) for oxygen detection by an oxygen/nitrogen/hydrogen analyzer (ON-836, obtained from LECO Japan Corp.).

[Example 1]

(1) Production of Complex Tungsten Oxide Particles

Complex tungsten oxide particles were produced using the composite material production apparatus 10 shown in FIG. 1 and the reduction treatment apparatus shown in FIG. 2, and then evaluated. Specific conditions will be described below.

The composite material production apparatus 10 includes the storage section 11 containing a solution containing an element W source and an element M source as a raw material solution, the two-fluid nozzle 12 for forming liquid droplets of the raw material and forming a flame together, and the reaction tube 13 connected to the filter 14 for recovering complex tungsten oxide particles formed.

The feed rate at which the raw material solution is fed to the two-fluid nozzle 12 was 3 g/min. The flow rate of oxygen as a carrier gas was controlled by the ejector 15 to be 15 L/min. The air flow rate in the ejector 15 was controlled to be within the range of 160 L/min to 180 L/min.

Propane gas and oxygen gas were used for formation of a flame by the two-fluid nozzle 12, and the flow rate of propane gas was set to 1.2 L/min and the flow rate of oxygen gas was set to 6.0 L/min.

A mixture solution of a solution in which $W(CO)_6$ as the element W source was dissolved in THF (tetrahydrofuran) (a solution containing the element W source) and a solution in which cesium acetate as the element M source was dissolved in ethanol (a solution containing the element M source) was used as the raw material, and was stored in the storage section 11. The mixture solution as the raw material was prepared such that Cs/W, which was the ratio between the number of moles (Cs) of Cs as the element M contained in the mixture solution and the number of moles (W) of the tungsten element contained in the mixture solution, would be 0.37.

The raw material solution and oxygen as the carrier gas were supplied from the storage section 11 to the two-fluid nozzle 12 to form an aerosol (aerosol formation step).

As described above, propane gas and oxygen gas were supplied to the two-fluid nozzle 12 to form a reaction field of a flame, and the formed aerosol was supplied into the flame and subjected to heat treatment (heat treatment step).

In the heat treatment step, the heat treatment conditions were selected such that complex tungsten oxide particles to be obtained through the heat treatment step would contain appropriate W atom defects and heterogeneous phases, and such that complex tungsten oxide particles from which spots, in which the Z-contrast of the W atoms had decreased, would be confirmed would be generated through the reduction treatment step. Specifically, the heat treatment conditions were selected based on the results of a test performed in advance. In the heat treatment step, the raw material was heat-treated at a temperature of 550°C or higher.

The complex tungsten oxide particles obtained in the heat treatment step were introduced into the reaction tube 13. The cooling water pipe 131 was disposed around the reaction tube 13 to circulate cooling water. Complex tungsten oxide particles introduced into the reaction tube 13 were recovered by the filter 14, which was a bag filter.

The XRD patterns of the complex tungsten oxide particles obtained through the heat treatment step were evaluated.

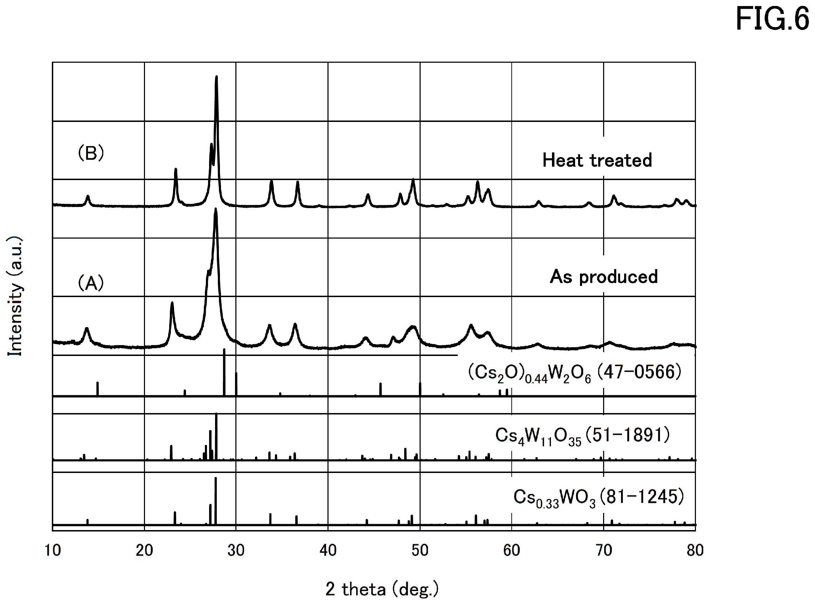

FIG. 6 shows the XRD patterns of the complex tungsten oxide particles obtained. In FIG. 6, the XRD patterns (A) indicated as "As produced" are the XRD patterns of the complex tungsten oxide particles after the heat treatment step. The particles were identified as a crystalline phase composed of a hexagonal crystal $Cs_{0.33}WO_3$ (ICDD: 81-1245) or an orthorhombic crystal $Cs_4W_{11}O_{35}$ (ICDD: 51-1891), and as a small amount of a cubic pyrochlore $(Cs_2O)_{0.44}W_2O_6$ (ICDD: 47-0566) phase. Rietveld analysis was used to identify the small amount of the crystalline phase.

Further, reduction treatment was performed using the reduction treatment apparatus 20 shown in FIG. 2.

As shown in FIG. 2, the heater 22 was provided around the reaction tube 21 under a stream of 3% by volume of $H_2$/97% by volume of Ar, and the temperature was raised from room temperature to 500°C. After the part on which the container 23 was placed reached the reduction treatment temperature, the container 23 was retained in this state for two hours, and then cooled to room temperature. In this way, the reduction treatment was performed (reduction treatment step). As a result, reduced particles, which were complex tungsten oxide particles according to Example 1, were obtained.

FIG. 6 shows an XRD pattern of the obtained complex tungsten oxide particles. In FIG. 6, an XRD pattern (B) indicated as "Heat treated" is the XRD pattern of the complex tungsten oxide particles after the reduction treatment step. The obtained XRD pattern contained only the diffraction peaks of $Cs_{0.33}WO_3$, and was confirmed to have a hexagonal crystal system.

The complex tungsten oxide particles after the reduction treatment step according to Example 1 were subjected to the composition analysis described above, and the Cs/W ratio, which was the ratio by number of moles between cesium and tungsten, was obtained. As a result, it was confirmed that the Cs/W ratio decreased from the preparation compositional ratio of 0.37 to 0.34. However, because the value of 0.34 is greater by 0.01 than the theoretical compositional ratio of 0.33, and the particles were composed of a single phase as judged from the XRD pattern, it is considered that there was almost no Cs defect.

Further, as the result of the composition analysis of the complex tungsten oxide particles, it was confirmed that the O/W ratio, which was the ratio by number of moles between oxygen and tungsten, was 2.841. In the following description, the complex tungsten oxide particles will be referred to as $Cs_{0.33}WO_3$ as evaluated on the XRD pattern.

(2) Production of Infrared-Absorbing Particle Dispersion Liquid

10% by mass of the complex tungsten oxide particles after the reduction treatment step according to Example 1, 10% by mass of an acrylic-based polymeric dispersant (an acrylic-based dispersant having an amine value of 48 mg KOH/g and a decomposition temperature of 250°C), and 80% by mass of toluene were weighed out. The weighed-out materials were added into a paint shaker together with zirconia beads having a diameter of 0.05 mm, and dispersion treatment was performed for 100 minutes using the paint shaker, to obtain a $Cs_{0.33}WO_3$ particle dispersion liquid, which was an infrared-absorbing particle dispersion liquid according to Example 1.

The average particle diameter of the complex tungsten oxide particles in the obtained dispersion liquid according to Example 1 (measured by a transmission electron microscope) was 27.2 nm.

The average particle diameter of the complex tungsten oxide particles was calculated based on observation in three fields of view using a transmission electron microscope. Specifically, images of a total of 600 to 700 complex tungsten oxide particles were observed in the three fields of view, and the area of each particle was calculated from the binarized data of the images to calculate the equivalent circle diameter of each particle. Then, the arithmetic mean of the particle diameters, i.e., the equivalent circle diameters, of all the complex tungsten oxide particles evaluated was obtained as the average particle diameter.

The $Cs_{0.33}WO_3$ particle dispersion liquid according to Example 1 was fractionated to remove the solvent, to thereby obtain $Cs_{0.33}WO_3$ particles, which were complex tungsten oxide particles according to Example 1.

FIGS. 7A and 7B show STEM-HAADF images of the $Cs_{0.33}WO_3$ particles, which were the complex tungsten oxide particles according to Example 1. FIG. 7A shows a STEM-HAADF image of the entirety of the particles. FIG. 7B shows an enlarged image of a square region 71 in the particles shown in FIG. 7A. As shown in FIG. 7B, the size of the observation field of view was adjusted to be approximately 20 nm square. Approximately fifteen dark regions, which were regions having a low Z-contrast of W atoms, were confirmed in the particles. Since three tungsten columns exist in a unit cell, the number of tungsten columns existing in the field of view was calculated to be 2,249 from the size of the unit cell and the size of the field of view. That is, the W defect exists in 0.67% of the columns as the number ratio.

The dark region, which was a low contrast region, was defined as a spot in which the maximum value of the Z-contrast of the tungsten column spot decreased to equal to or less than 95% of the average value.

FIGS. 8A to 8F show line profiles including the W defects in the STEM-HAADF image of the complex tungsten oxide particles according to Example 1. FIGS. 8A to 8F correspond to line profiles on the lines L1 to L6 in FIG. 7B, respectively.

As the Z-contrast might vary even within the same line due to such factors as the thickness of the particles, inclination to electron beams, and the like, the maximum values of the Z-contrasts in the respective tungsten column spots in the field of view were averaged, as the Z-contrast intensity of W atoms in a bulk region that was free of W defects. Using the average value of the maximum values of the Z-contrasts in the respective tungsten column spots in the field of view as a reference, a tungsten column spot in which the maximum value of the contrast was equal to or less than 95% of the average value was determined as a W-defective site.

On the line L1 shown in FIG. 8A, the maximum value of the Z-contrast decreased to 89.1% of the average value at the point P1, and to 88.4% at the point P2, and these points are W-defective sites.

On the line L2 shown in FIG. 8B, the maximum value of the Z-contrast decreased to 89.3%, 92.8%, 93.2%, and 91.35% of the average value at the points P3 to P6, respectively.

On the line L3 shown in FIG. 8C, the maximum value of the Z-contrast decreased to 86.95% and 85.6% of the average value at the points P7 and P8, respectively.

On the line L4 shown in FIG. 8D, the maximum value of the Z-contrast decreased to 89.2% and 89.4% of the average value at the points P9 and P10, respectively.

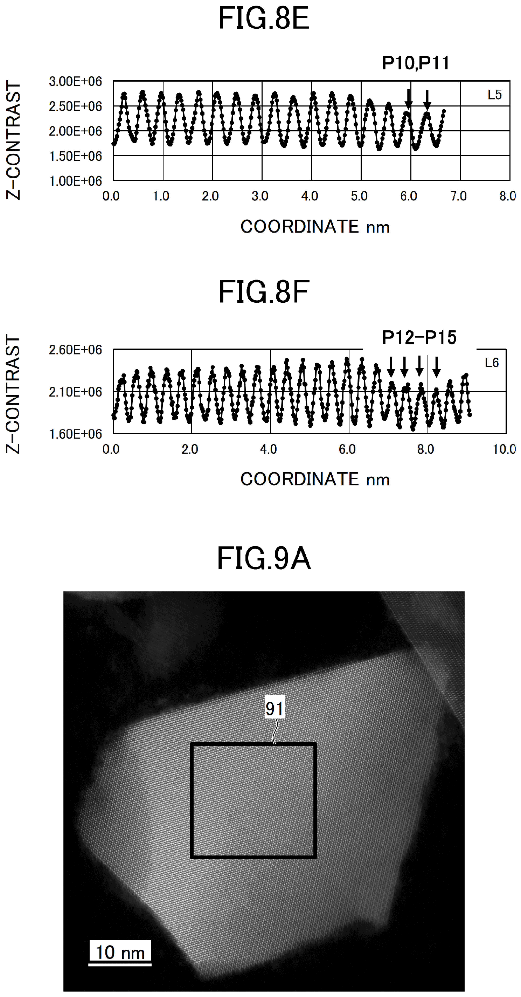

On the line L5 shown in FIG. 8E, the maximum value of the Z-contrast decreased to 88.6% of the average value at the point P11.

On the line L6 shown in FIG. 8 F, the maximum value of the Z-contrast decreased to 94.0%, 93.2%, 93.4%, and 90.6% of the average value at the points P12 to P15, respectively.

FIG. 12A is a STEM-HAADF image of the complex tungsten oxide particle according to Example 1 with the beam incident along [110], that is, an image of a prism plane. In FIG. 12A, defective planes 121 due to W atom defects were generated in the direction perpendicular to the c-axis. These defects were defects in basal planes (001). FIG. 12B is an enlarged view of the defective plane in FIG. 12A. Adjacently to the defect, spaces 122 having a length of approximately 3 nm, in which no Cs atoms and no W atoms were present, were confirmed to exist. It is considered that the defective plane 121, which was a basal plane defect, and the spaces 122 free of Cs and W along the c-axis direction were considered to have remained as the interfaces to the regions that were crystallized when the Cs and W atoms were relocated in the crystal during the heat treatment step.

Furthermore, it was confirmed that there was a distorted structure in which, at intervals of 1/4 period, the crystal structure was out of alignment across the defective plane 121 caused by the W atom defect and having a length of approximately 30 nm in the direction perpendicular to the c-axis. FIG. 13 schematically shows the locations of W atoms and Cs atoms shown in FIGS. 12A and 12B.

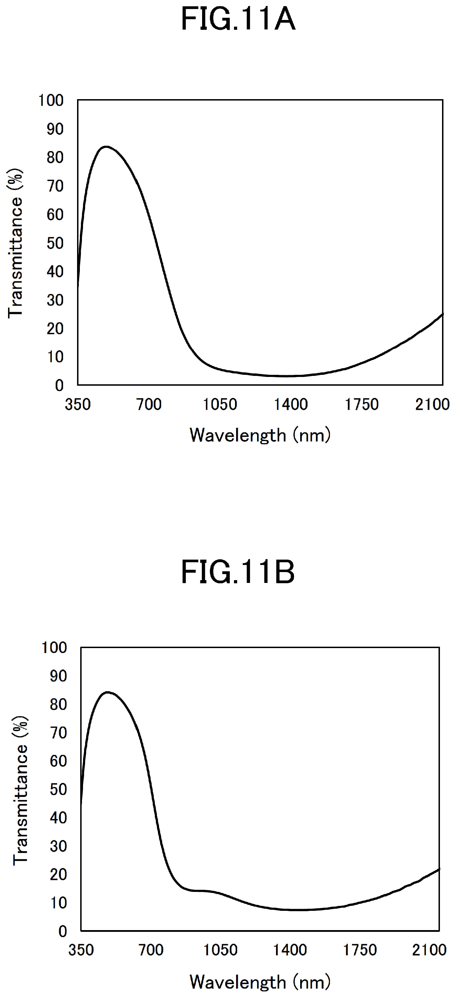

As an optical characteristic of the infrared-absorbing particle dispersion liquid according to Example 1, a transmitted light profile was measured under the aforementioned conditions. The result of the transmitted light profile is shown in FIG. 11A, and the transmittance of each wavelength is shown in Table 1.

When measuring the optical characteristic, the infrared-absorbing particle dispersion liquid was adjusted such that the visible light transmittance would be 80%.

A molar absorptivity curve was obtained from an absorptivity curve obtained when the transmitted light profile of the infrared-absorbing particle dispersion liquid according to Example 1 was measured. The molar absorptivity curve was separated into absorption curves of three absorption elements: an absorption curve of localized surface plasmon resonance in the direction perpendicular to the c-axis (LSPR⊥), an absorption curve of localized surface plasmon resonance in the direction parallel with the c-axis (LSPR//), and an absorption curve of polaron absorption. The result is shown in FIG. 15A. In FIG. 15A, "exp." shows the actually measured value, and "calc" shows the sum of the absorption curves of the three absorption elements.

Table 2 shows the peak position and the peak intensity of the absorption curves of the three absorption elements, and the integrated intensities of the absorption curves. Furthermore, Table 3 shows the ratio of the integrated intensity of the absorption curve of each of the three absorption elements to the integrated intensity of the molar absorptivity curve.

In addition, the values of the L*, a*, and b* color space as the chromaticity were calculated from the measured data of the spectrophotometer. The results are shown in Table 4.

(3) Manufacture of Infrared-Absorbing Fiber

Toluene was removed from the infrared-absorbing particle dispersion liquid according to Example 1 using a spray dryer, to obtain (powder A), which was a $Cs_{0.33}WO_3$ dispersoid powder.

The obtained dispersoid powder (powder A) was added to a polyethylene terephthalate resin pellet, which was a thermoplastic resin, and mixed uniformly by a blender. Then, the mixture was melt-kneaded and extruded by a twin-screw extruder, and the extruded strand was cut into pellets. By the above procedure, a masterbatch (masterbatch a1) containing 40% by mass of $Cs_{0.33}WO_3$ particles, which were a heat-absorbing component, was obtained.

The masterbatch a1 was melt-spun and then stretched, to manufacture a polyester multifilament yarn a1. The obtained polyester multifilament yarn a1 was cut, to manufacture polyester staples a1.

A masterbatch free of $Cs_{0.33}WO_3$ particles was melt-spun and then stretched, to manufacture a polyester multifilament yarn a2. The obtained polyester multifilament yarn a2 was cut, to manufacture polyester staples a2. Spun yarns a1 were manufactured using the polyester staples a1, and spun yarns a2 were manufactured using polyester staples a2.

(4) Manufacture of Heat-Retaining Knit as Fiber Product

A knitted product a1, which was a fiber product according to Example 1 having near-infrared absorptivity, was obtained by using the spun yarns a1 and the spun yarns a2. The knitted product a1 was manufactured by adjusting the blending ratio between the spun yarns a1 and the spun yarns a2 such that the solar radiation reflectance would be 8%.

(Evaluation of Temperature Raising Effect)

Next, the temperature raising effect on the fabric back surface of the knitted product a1 was measured as follows.

Under an environment of 20°C and 60% RH, the knitted fabric product was irradiated with a solar spectrum simulator lamp (Solar Simulator XL-03E50 (custom), obtained from SERIC Ltd.) from a distance of 30 cm from the fabric, and the temperature on the fabric back surface was measured with a radiation thermometer (HT-11, obtained from Konica Minolta, Inc.) at certain timings (0 sec, 30 sec, 60 sec, 180 sec, 360 sec, and 600 sec).

The evaluation results are shown in Table 5.

(Evaluation of Secret Filming Prevention)

Precursor knitted fabrics according to Example 1 were manufactured using the spun yarns a1 and the spun yarns a2 such that the amounts of the complex tungsten oxide particles used per unit area would be the values shown in Table 6. In Example 1, as shown in Table 6, six types of precursor knitted fabrics in which the contents of the complex tungsten oxide particles per unit area were the concentration B to the concentration G were manufactured.

Thereafter, the precursor knitted fabrics were dyed in brown with a cationic dye, to manufacture knitted fabrics for evaluation of secret filming prevention according to Example 1. Here, the reason the knitted fabrics for evaluation of secret filming prevention according to Example 1 were manufactured by dyeing was to avoid a situation in which, through an undyed white knitted product, things might be seen even under visible light.

Further, as a reference example, by using only the spun yarns a2 free of complex tungsten oxide particles, knitted fabrics for evaluation of secret filming prevention according to the reference example were manufactured in the same manner as for the knitted fabrics for evaluation of secret filming prevention according to the present Example.

(Average Reflectance of Knitted Product According to Example 1)

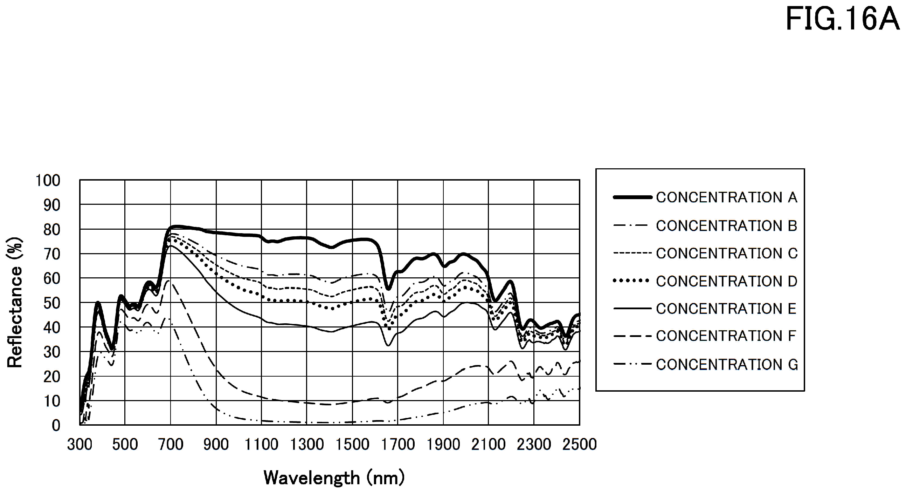

Then, the reflectance of each knitted fabric according to Example 1 was measured at 5 nm intervals in a wavelength range of 800 nm or greater and 1,300 nm or less using a spectrophotometer obtained from Hitachi, Ltd., and the average reflectance was calculated. The measurement results of the reflectance in a wavelength range of 300 nm or greater and 2,500 nm or less are shown in FIG. 16A, and the evaluation result of the average reflectance of the fabric is shown in Table 6.

(Evaluation of Knitted Fabrics According to Example 1 and Reference Example)

Next, the knitted fabrics according to Example 1 and Reference Example were evaluated in terms of "Prevention of secret filming by infrared rays (imaging through clothing by CCD camera)" according to the following test method compliant with the Boken Standard "BQE A 033" of the Japan Spinners' Inspecting Foundation.

"Test Method"

(Step 1) A test piece of the knitted fabric was overlaid on a transparency gauge plate (eye chart), and set on a test stand.
(Step 2) An infrared projector was used to floodlight the surface of the test piece at an intensity of approximately 7 mW/cm$^2$.
(Step 3) An image of the test piece was routinely captured with a digital camera.
(Step 4) An image of the test piece and a scene that might be seen through the test piece was imaged with an infrared camera.
(Step 5) The image captured by the imaging to include the scene that might be seen through the test piece was confirmed, to determine the presence or absence of infrared transmission.

"Determination Result"

The knit fabrics according to Example 1 showed no infrared transmission. On the other hand, the knit fabrics according to the Reference Example showed infrared transmission.

[Comparative Example 1]

(1) Production of Complex Tungsten Oxide Particles

0.216 kg of $Cs_2CO_3$ was dissolved in 0.330 kg of water, and the resulting solution was added to 1.000 kg of $H_2WO_4$, stirred sufficiently, and dried, to obtain a dried material. The dried material was placed in an electric furnace while supplying 5% by volume of $H_2$ gas using $N_2$ gas as a carrier, heated, and fired at a temperature of 800°C for one hour. Thereafter, the supply gas was switched to $N_2$ gas only, and the temperature was lowered to room temperature, to obtain a complex tungsten oxide coarse powder according to Comparative Example 1.

(2) Production of Infrared-Absorbing Particle Dispersion Liquid

10% by mass of the obtained complex tungsten oxide coarse powder, 10% by mass of an acrylic-based polymeric dispersant (an acrylic-based dispersant having an amine value of 48 mgKOH/g and a decomposition temperature of 250°C), and 80% by mass of toluene were weighed out. The weighed-out materials were added into a paint shaker together with zirconia beads having a diameter of 0.1 mm, and dispersion treatment was performed for two hours using the paint shaker, to obtain an infrared-absorbing particle dispersion liquid according to Comparative Example 1. The average particle diameter of the complex tungsten oxide particles in the obtained dispersion liquid according to Comparative Example 1 (measured by a transmission electron microscope) was 25.1 nm. The average particle diameter was measured and calculated by the same procedure and conditions as those in Example 1. The dispersion liquid according to Comparative Example 1 was fractionated, to remove the solvent, to thereby obtain $Cs_{0.33}WO_3$ particles as the complex tungsten oxide particles according to Comparative Example 1.
FIGS. 9A and 9B show STEM-HAADF images of the $Cs_{0.33}WO_3$ particles, which were the complex tungsten oxide particles according to Comparative Example 1. FIG. 9A shows a STEM-HAADF image of the entirety of the particles. FIG. 9B shows an image of a quadrangular region 91 observed under magnification in the particles shown in FIG. 9A. The powder synthesized by the solid phase method had a fracture cross-section due to the long-time dispersion treatment. Since the contrast is affected by the particle thickness, the region 91 in the center of the particles, which was considered to be less affected by this, was magnified and extracted.
In FIG. 9B, low contrast regions in Cs columns were confirmed at the locations indicated by arrows 92 and 93. The defects of Cs columns were considered to be caused by desorption of Cs due to the long-time grinding treatment.

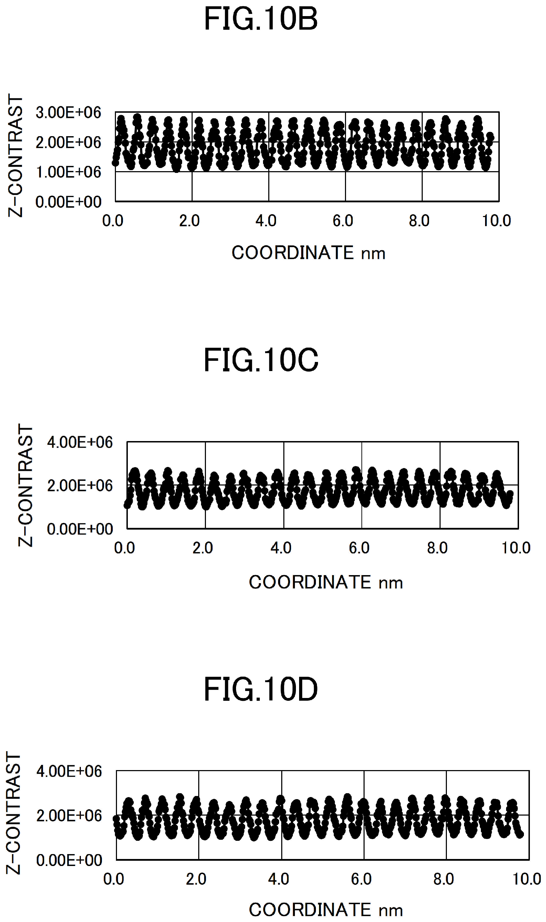

FIGS. 10B to 10D show the extracted results of line profiles from the lines L11 to L13, which are W/W rows, in the STEM-HAADF image shown in FIG. 10A. No point at which the Z-contrast of W atoms was equal to or less than 95% of the average contrast was confirmed at any point. In other words, it was confirmed that no W defect occurred.
As an optical characteristic of the infrared-absorbing particle dispersion liquid according to Comparative Example 1, a transmitted light profile was measured under the aforementioned conditions. The result of the transmitted light profile is shown in FIG. 11B, and the transmittance of each wavelength is shown in Table 1.

A molar absorptivity curve was obtained from the absorption curve obtained in the measurement of the transmitted light profile of the infrared-absorbing particle dispersion liquid according to Comparative Example 1. The molar absorptivity curve was separated into absorption curves of three absorption elements: an absorption curve of localized surface plasmon resonance in the direction perpendicular to the c-axis (LSPR⊥), an absorption curve of localized surface plasmon resonance in the direction parallel with the c-axis (LSPR//), and an absorption curve of polaron absorption. The result is shown in FIG. 15B.

The peak position and the peak intensity of the absorption curves of the three absorption elements, and the integrated intensities of the absorption curves, are shown in Table 2. Furthermore, the ratio of the integrated intensity of the absorption curve of each of the three absorption elements to the integrated intensity of the molar absorptivity curve is shown in Table 3.

Furthermore, the infrared-absorbing particle dispersion liquid according to Comparative Example 1 was diluted such that the visible light transmittance would be 80%, and the values of the L*, a*, and b* color space as the chromaticity were calculated from the measured data of a spectrophotometer. The results are shown in Table 4.

(3) Manufacture of Infrared-Absorbing Fiber

Toluene was removed from the infrared-absorbing particle dispersion liquid according to Comparative Example 1 using a spray dryer, to obtain a $Cs_{0.33}WO_3$ dispersoid powder (powder B).

The obtained dispersoid powder (powder B) was added to a polyethylene terephthalate resin pellet, which was a thermoplastic resin, and then uniformly mixed by a blender. Subsequently, the mixture was melt-kneaded and extruded by a twin-screw extruder, and the extruded strand was cut into pellets. A masterbatch (masterbatch b1) containing 40% by mass of $Cs_{0.33}WO_3$ particles, which were a heat-absorbing component, was obtained by the above procedure.

The masterbatch b1 was melt-spun and then stretched, to manufacture a polyester multifilament yarn b1. The obtained polyester multifilament yarn b1 was cut, to manufacture polyester staples b1. Spun yarns b1 were manufactured using the polyester staples b1.

(4) Manufacture of Heat-Retaining Knit as Fiber Product

A knitted product b1, which was a fiber product according to Comparative Example 1, was obtained by using the spun yarns b1, and the spun yarns a2 free of complex tungsten oxide particles manufactured in Example 1. The knitted product b1 was manufactured by adjusting the blending ratio between the spun yarns b1 and the spun yarns a2 such that the solar radiation reflectance would be 8%.

(Evaluation of Temperature Raising Effect)

Next, the temperature raising effect on the fabric back surface of the manufactured knitted product b1 was measured under the same conditions as in Example 1.

The evaluation results are shown in Table 5. According to Table 5, there was no difference in the temperature rise on the fabric back surfaces of the knitted products of Example 1 and Comparative Example 1.

[Evaluation of Secret Filming Prevention]

(Evaluation of Secret filming Prevention)

Precursor knitted fabrics according to Comparative Example 1 were manufactured using the spun yarns b1 and the spun yarns a2 such that the amount of complex tungsten oxide particles used per unit area would be the values shown in Table 6. In Comparative Example 1, six types of precursor knitted fabrics in which the contents of complex tungsten oxide particles per unit area were a concentration B to a concentration G were manufactured as shown in Table 6.

Thereafter, the precursor knitted fabrics were dyed brown with a cationic dye, to manufacture knitted fabrics for evaluation of secret filming prevention according to Comparative Example 1.

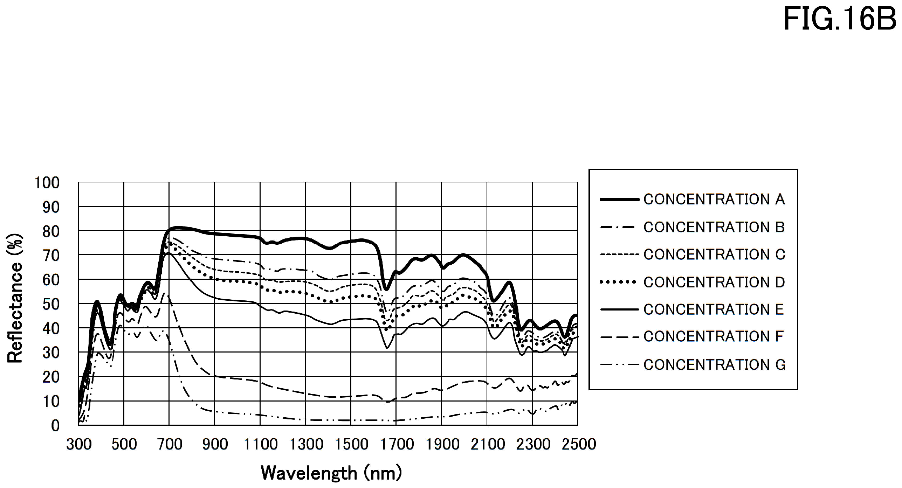

The obtained knitted fabrics for evaluation of secret filming prevention according to Comparative Example 1 were evaluated under the same conditions as in Example 1. FIG. 16B shows the measurement results of the reflectance, and Table 6 shows the evaluation results of the average reflectance of the fabrics.

[Table 1]

| | Transmittance of each wavelength (%) | | | | | |
|---|---|---|---|---|---|---|
| | 600 nm | 700 nm | 800 nm | 900 nm | 1,000 nm | 1,100 nm |
| Ex. 1 | 76.72 | 75.54 | 33.31 | 13.82 | 6.76 | 4.69 |
| Comp. Ex. 1 | 76.47 | 51.12 | 21.59 | 13.49 | 13.85 | 11.89 |

[Table 2]

| | | Peak position (eV) | Peak position (nm) | Peak value (height) | Integrated intensity of absorption curve |
|---|---|---|---|---|---|
| Ex. 1 | Absorption curve of localized surface plasmon resonance in direction perpendicular to c-axis (LSPR⊥) | 0.86 | 1,435 | 2,526.58 | 96,015.38 |
| | Absorption curve of localized surface plasmon resonance in direction parallel with c-axis (LSPR//) | 1.20 | 1,030 | 922.35 | 33,042.00 |
| | Absorption curve of polaron absorption | 1.26 | 985 | 438.19 | 12,265.60 |
| Comp. Ex. 1 | Absorption curve of localized surface plasmon resonance in direction perpendicular to c-axis (LSPR⊥) | 0.80 | 1,550 | 2,050.66 | 78,843.30 |
| | Absorption curve of localized surface plasmon resonance in direction parallel with c-axis (LSPR//) | 1.00 | 1,240 | 437.63 | 20,209.67 |
| | Absorption curve of polaron absorption | 1.40 | 885 | 1,058.23 | 31,174.01 |

[Table 3]

| | Ratio (%) to integrated intensity of molar absorptivity curve | | |
|---|---|---|---|
| | Absorption curve of localized surface plasmon resonance in direction perpendicular to c-axis (LSPR⊥) | Absorption curve of localized surface plasmon resonance in direction parallel with c-axis (LSPR//) | Absorption curve of polaron absorption |
| Ex. 1 | 67.9 | 23.4 | 8.7 |
| Comp. Ex. 1 | 60.6 | 15.5 | 23.9 |

[Table 4]

| | L* | a* | b* |
|---|---|---|---|
| Ex. 1 | 91.77102 | -4.5619 | -0.61502 |
| Comp. Ex. 1 | 91.76563 | -4.47674 | -0.71411 |

[Table 5]

| | | Lamp irradiation time (second) | | | | | |
|---|---|---|---|---|---|---|---|
| | | 0 | 30 | 60 | 180 | 360 | 600 |
| Temperature (°C) on fabric back surface | Ex. 1 | 25 | 41 | 45 | 47 | 47 | 47 |
| | Comp. Ex. 1 | 25 | 40 | 45 | 47 | 47 | 47 |

[Table 6]

| | | Complex tungsten oxide particles used | Use amount (g/m²) of complex tungsten oxide particles | Average reflectance (%) of wavelength from 800 nm to 1,300 nm | Japan Spinners' Inspecting Foundation test |
|---|---|---|---|---|---|
| Ref. Ex. | Conc. A | - | 0.00 | 77 | Transmission observed |
| Ex. 1 | Conc. B | Ex. 1 | 0.09 | 65 | Transmission not observed |
| | Conc. C | Ex. 1 | 0.13 | 61 | Transmission not observed |
| | Conc. D | Ex. 1 | 0.17 | 56 | Transmission not observed |
| | Conc. E | Ex. 1 | 0.26 | 48 | Transmission not observed |
| | Conc. F | Ex. 1 | 0.87 | 16 | Transmission not observed |
| | Conc. G | Ex. 1 | 1.73 | 4 | Transmission not observed |
| Comp. Ex. 1 | Conc. B | Comp. Ex. 1 | 0.09 | 66 | Transmission observed |
| | Conc. C | Comp. Ex. 1 | 0.13 | 62 | Transmission not observed |
| | Conc. D | Comp. Ex. 1 | 0.17 | 58 | Transmission not observed |
| | Conc. E | Comp. Ex. 1 | 0.26 | 50 | Transmission not observed |
| | Conc. F | Comp. Ex. 1 | 0.87 | 18 | Transmission not observed |
| | Conc. G | Comp. Ex. 1 | 1.73 | 4 | Transmission not observed |

The infrared-absorbing particle dispersion liquid according to Example 1 shown in FIG. 11A was confirmed to be able to achieve a bottom transmittance of 5% or lower in the near-infrared region even when the peak transmittance in the wavelength region of 500 nm to 600 nm was 75% or higher.

On the other hand, the infrared-absorbing particle dispersion liquid according to Comparative Example 1 shown in FIG. 11B was confirmed to have a poor near-infrared-shielding effect by failing to achieve a bottom transmittance of 5% or lower in the near-infrared region when the peak transmittance in the wavelength region of 500 nm to 600 nm was 75% or higher.

Furthermore, Table 1 shows that the transmittance of a wavelength of 700 nm through the infrared-absorbing particle dispersion liquid according to Example 1 was higher than the transmittance through the infrared-absorbing particle dispersion liquid according to Comparative Example 1 composed of the conventional complex tungsten oxide particles, and that light on the long wavelength side in the visible region (a wavelength region of 380 nm or greater and 780 nm or less) could also be transmitted through the infrared-absorbing particle dispersion liquid according to Example 1. This shows that the complex tungsten oxide particles according to Example 1, through which red light around a wavelength of 800 nm could also be transmitted, would contribute to improving the hue of the conventional complex tungsten oxide particles.

According to Table 4, the infrared-absorbing particle dispersion liquid according to Example 1 had a b* value of -0.61502, while the near-infrared-absorbing particle dispersion liquid according to Comparative Example 1 had a b* value of -0.71411. A more negative b* value shows that the dispersion liquid is bluer. This shows that Example 1 had a lesser blue hue than the conventional complex tungsten oxide particles, and contributed to hue improvement.

According to the results shown in Table 6, it was confirmed that no transmission through the knitted fabrics for evaluation of secret filming prevention according to Example 1 was observed in the Japan Spinners' Inspecting foundation test, even when the content of the complex tungsten oxide particles per unit area was 0.09 g/m². On the other hand, it was confirmed that the knitted fabrics for evaluation of secret filming prevention according to Comparative Example 1 would not exhibit the effect of transmission not being observed, unless the content of the complex tungsten oxide particles per unit was 0.13 g/m² or greater.

Furthermore, the following facts can be confirmed by comparing FIGS. 16A and 16B. The reflectance curves of the knitted fabrics for evaluation of secret filming prevention according to Example 1 shown in FIG. 16A indicate that the reflectance of a wavelength of 1,050 nm was under 65% even at the concentration B at which the content of the complex tungsten oxide particles per unit area was 0.09 g/m². On the other hand, the reflectance curves of the knitted fabrics for evaluation of secret filming prevention according to Comparative Example 1 shown in FIG. 16B indicate that the reflectance of the wavelength of 1,050 nm was above 65% at the concentration B at which the content of the complex tungsten oxide particles per unit area was 0.09 g/m².

From these results, it can be understood that the complex tungsten oxide particles contained in the infrared-absorbing fiber of the present embodiment had better infrared absorption characteristics than those of the conventionally known complex tungsten oxide particles.

The present application claims priority to Japanese Patent Application No. 2023-170834, filed with the Japan Patent Office on September 29, 2023, and the entire contents of Japanese Patent Application No. 2023-170834 are incorporated herein.

REFERENCE SIGNS LIST

| | |
|---|---|
| 10 | composite material production apparatus |
| 11 | storage section |
| 12 | two-fluid nozzle |
| 13 | reaction tube |
| 131 | pipe |
| 14 | filter |
| 15 | ejector |
| 20 | reduction treatment apparatus |
| 21 | reaction tube |
| 21A | one port |
| 21B | other port |
| 22 | heater |
| 23 | container |
| 24 | complex tungsten oxide particles |
| 30 | infrared-absorbing particle dispersion liquid |
| 31 | infrared-absorbing particles |
| 32 | liquid medium |
| 40 | infrared-absorbing fiber |
| 41 | fiber |
| 42 | complex tungsten oxide particles |
| 41A | surface |
| 41B | interior |
| CA | center axis |
| 501 | W/W row |
| 502 | W/Cs row |
| 51 | W atom |
| 52 | O atom |
| 53 | element M |
| 54 | octahedron |
| 55 | void |
| 71 | region |
| L1 to L6 | line |
| P1 to P15 | point |
| 91 | region |
| 92, 93 | arrow |
| L11 to L13 | line |
| 121 | defective plane |
| 122 | space |

Claims

1. An infrared-absorbing fiber, comprising:

a fiber; and
complex tungsten oxide particles located at one or more locations selected from an interior of the fiber and a surface of the fiber,
wherein the complex tungsten oxide particles contain a complex tungsten oxide,
the complex tungsten oxide is represented by a general formula $M_xW_yO_z$ (where the element M is one or more elements selected from alkali metal elements, alkaline earth metal elements, rare earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I, W is tungsten, O is oxygen, $0.20 \leq x/y \leq 0.37$, and $2.2 \leq z/y \leq 3.3$), the complex tungsten oxide has a hexagonal crystal system, and

in a STEM-HAADF image of the complex tungsten oxide particles with a beam incident along with [001], the complex tungsten oxide particles contain 0.01% or greater and 10% or less by number of spots, in which Z-contrast of a tungsten atom decreases to equal to or less than 95% of an average value.

2. The infrared-absorbing fiber according to claim 1,
wherein the element M in the complex tungsten oxide contains one or more elements selected from Rb and Cs.

3. The infrared-absorbing fiber according to claim 1 or 2,
wherein the complex tungsten oxide particles have an average particle diameter of 10 nm or greater and 200 nm or less.

4. The infrared-absorbing fiber according to claim 1 or 2,
wherein, in a STEM-HAADF image with a beam incident along with [110], the complex tungsten oxide particles contain a defective plane in a direction perpendicular to c-axis.

5. The infrared-absorbing fiber according to claim 1 or 2,
wherein the fiber is one or more selected from: a fiber group consisting of synthetic fiber, semi-synthetic fiber, natural fiber, regenerated fiber, and inorganic fiber; and a blended yarn of two or more types of fibers selected from the fiber group, the blended yarn being obtained by blended spinning, yarn doubling, or filament yarn blending.

6. The infrared-absorbing fiber according to claim 5,
wherein the synthetic fiber is one or more selected from polyurethane fiber, polyamide fiber, acrylic fiber, polyester fiber, polyolefin fiber, polyvinyl alcohol fiber, polyvinylidene chloride fiber, polyvinyl chloride fiber, and polyether ester fiber.

7. The infrared-absorbing fiber according to claim 5,
wherein the semi-synthetic fiber is one or more selected from cellulosic fiber, protein fiber, chlorinated rubber, and hydrochlorinated rubber.

8. The infrared-absorbing fiber according to claim 5,
wherein the natural fiber is one or more selected from vegetable fiber, animal fiber, and mineral fiber.

9. The infrared-absorbing fiber according to claim 5,
wherein the regenerated fiber is one or more selected from cellulosic fiber, protein fiber, alginate fiber, rubber fiber, chitin fiber, and mannan fiber.

10. The infrared-absorbing fiber according to claim 5,
wherein the inorganic fiber is one or more selected from metal fiber, carbon fiber, and silicate fiber.

11. A fiber product, comprising:
the infrared-absorbing fiber of claim 1 or 2.

# FIG.1

10

# FIG.2

20

# FIG.3

30

31

32

# FIG.4

# FIG.5

FIG.6

EP 4 786 658 A1

# FIG.7A

# FIG.7B

# FIG.8A

# FIG.8B

# FIG.8C

# FIG.8D

## FIG.8E

## FIG.8F

## FIG.9A

# FIG.9B

# FIG.10A

# FIG.10B

# FIG.10C

# FIG.10D

# FIG.11A

# FIG.11B

# FIG.12A

# FIG.12B

FIG.13

W defective basal shear plane

c-axis

Cs plane   W plane

Planer Cs, W defects

Cs   W

EP 4 786 658 A1

# FIG.14A

# FIG.14B

# FIG.15A

# FIG.15B

FIG.16A

FIG.16B

EP 4 786 658 A1

## INTERNATIONAL SEARCH REPORT

| International application No. |
|---|
| **PCT/JP2024/034547** |

**A. CLASSIFICATION OF SUBJECT MATTER**

*D01F 1/10*(2006.01)i; *C01G 41/00*(2006.01)i; *D06M 11/48*(2006.01)i

FI: D01F1/10; C01G41/00 A; D06M11/48

According to International Patent Classification (IPC) or to both national classification and IPC

**B. FIELDS SEARCHED**

Minimum documentation searched (classification system followed by classification symbols)

D01F1/00-9/04; C01G41/00-41/04; D06M10/00-11/84; D06M16/00; D06M19/00-23/18

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2023-19374 A (SUMITOMO METAL MINING CO., LTD.) 09 February 2023 (2023-02-09)<br>claims, examples 1-6, 2-6, paragraph [0184] | 1-11 |
| A | JP 2019-504814 A (EVONIK DEGUSSA GMBH) 21 February 2019 (2019-02-21)<br>claims | 1-11 |
| A | JP 2020-26384 A (SUMITOMO METAL MINING CO., LTD.) 20 February 2020 (2020-02-20)<br>claims, examples | 1-11 |
| A | JP 2021-28279 A (SUMITOMO METAL MINING CO., LTD.) 25 February 2021 (2021-02-25)<br>claims, examples | 1-11 |
| A | JP 2022-135131 A (SUMITOMO METAL MINING CO., LTD.) 15 September 2022 (2022-09-15)<br>claims, examples | 1-11 |

☑ Further documents are listed in the continuation of Box C.     ☑ See patent family annex.

\* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 November 2024** | **03 December 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

| | International application No. |
|---|---|
| | **PCT/JP2024/034547** |

**C.     DOCUMENTS CONSIDERED TO BE RELEVANT**

| Category* | Citation of document, with indication, where appropriate, of the relevant passages | Relevant to claim No. |
|---|---|---|
| A | JP 2023-78980 A (SUMITOMO METAL MINING CO., LTD.) 07 June 2023 (2023-06-07) claims, examples | 1-11 |
| E, A | WO 2024/195641 A1 (SUMITOMO METAL MINING CO., LTD.) 26 September 2024 (2024-09-26) claims | 1-11 |

Form PCT/ISA/210 (second sheet) (July 2022)

## INTERNATIONAL SEARCH REPORT
### Information on patent family members

International application No.

**PCT/JP2024/034547**

| Patent document cited in search report | | | Publication date (day/month/year) | Patent family member(s) | | | Publication date (day/month/year) |
|---|---|---|---|---|---|---|---|
| JP | 2023-19374 | A | 09 February 2023 | (Family: none) | | | |
| JP | 2019-504814 | A | 21 February 2019 | US<br>claims<br>WO<br>EP<br>CN | 2020/0230703<br><br>2017/129516<br>3408227<br>109071261 | A1<br><br>A1<br>A1<br>A | |
| JP | 2020-26384 | A | 20 February 2020 | (Family: none) | | | |
| JP | 2021-28279 | A | 25 February 2021 | (Family: none) | | | |
| JP | 2022-135131 | A | 15 September 2022 | (Family: none) | | | |
| JP | 2023-78980 | A | 07 June 2023 | (Family: none) | | | |
| WO | 2024/195641 | A1 | 26 September 2024 | (Family: none) | | | |

Form PCT/ISA/210 (patent family annex) (July 2022)

**REFERENCES CITED IN THE DESCRIPTION**

**Patent documents cited in the description**

- JP 2018135605 A
- JP H11279830 A
- JP H9291463 A

- WO 2018235839 A
- JP 2008223171 A
- JP 2023170834 A